(19)

**Europäisches Patentamt**
**European Patent Office**
**Office européen des brevets**

(11) **EP 3 632 543 A1**

(12) **EUROPEAN PATENT APPLICATION**
published in accordance with Art. 153(4) EPC

(43) Date of publication:
08.04.2020 Bulletin 2020/15

(21) Application number: 18809578.0

(22) Date of filing: 31.05.2018

(51) Int Cl.:
*B01J 29/035* (2006.01)    *B01J 29/14* (2006.01)
*B01J 29/46* (2006.01)    *B01J 29/68* (2006.01)
*B01J 29/76* (2006.01)    *B01J 35/10* (2006.01)
*C01B 3/04* (2006.01)    *H01M 8/0606* (2016.01)

(86) International application number:
**PCT/JP2018/021089**

(87) International publication number:
**WO 2018/221701 (06.12.2018 Gazette 2018/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2017 JP 2017108635**

(71) Applicant: **Furukawa Electric Co., Ltd.
Chiyoda-ku
Tokyo 100-8322 (JP)**

(72) Inventors:
• **MASUDA Takao**
**Hokkaido 0600808 (JP)**
• **NAKASAKA Yuta**
**Hokkaido 0600808 (JP)**

• **YOSHIKAWA Takuya**
**Hokkaido 0600808 (JP)**
• **KATO Sadahiro**
**Tokyo 100-8322 (JP)**
• **FUKUSHIMA Masayuki**
**Tokyo 100-8322 (JP)**
• **TAKAHASHI Hiroko**
**Tokyo 100-8322 (JP)**
• **BANBA Yuichiro**
**Tokyo 100-8322 (JP)**
• **SEKINE Kaori**
**Tokyo 100-8322 (JP)**

(74) Representative: **Gunzelmann, Rainer
Wuesthoff & Wuesthoff
Patentanwälte PartG mbB
Schweigerstraße 2
81541 München (DE)**

(54) **AMMONIA DECOMPOSITION CATALYST STRUCTURE AND FUEL CELL**

(57) An object of the present invention is to provide a structured catalyst for ammonia decomposition capable of favorably maintaining catalytic activity by suppressing aggregation of catalyst particles and efficiently performing a decomposition reaction from ammonia to hydrogen, and a fuel cell using the same. The structured catalyst for ammonia decomposition used for decomposing ammonia to generate hydrogen includes a support having a porous structure constituted of a zeolite-type compound and at least one catalytic substance present inside the support. The support includes channels connecting with each other, and the catalytic substance is metal nanoparticles and present at least in the channels of the support.

FIG. 1A

FIG. 1B

**Description**

Technical Field

The present invention relates to a structured catalyst for ammonia decomposition and a fuel cell.

Background Art

In recent years, the use of hydrogen as a clean energy source has attracted attention from the viewpoint of environmental protection, and for example, a method for recovering hydrogen from ammonia generated from organic waste, or a fuel cell vehicle using hydrogen as fuel has been actively developed. Although hydrogen is preferred as clean energy, a large volume is required for storage, and thus, particularly when used as a source material for a fuel cell for automatic use, a method for supplying hydrogen to a fuel cell has been a challenge. As a solution to this problem, a method for storing hydrogen in the state of liquid ammonia and producing hydrogen by catalytic decomposition of vaporized ammonia has recently been attracting attention.

Normally, the decomposition reaction of ammonia ($2NH_3 \rightarrow 3H_2 + N_2$) is an endothermic reaction involving volume expansion, and therefore, it is advantageous that the reaction occurs at a lower reaction pressure and a higher reaction temperature in terms of reaction equilibrium. It is preferable to use a catalyst because thermal decomposition of ammonia requires an elevated temperature of 800°C or higher and desirably 1000°C or higher. Catalytic decomposition using a catalyst allows decomposition reactions at a lower reaction temperature from 300 to 700°C.

In addition, particularly when liquid ammonia is used as a source material in a fuel cell for automobiles, it is desirable to reduce residual ammonia and thus generate high-purity hydrogen. Therefore, ammonia decomposition catalysts (hydrogen generating catalyst) that can efficiently decompose and convert ammonia at a relatively low temperature into hydrogen are required.

Typically, in such an ammonia decomposition catalyst, heat-resistant ceramics having a melting point of approximately 2000°C or higher, such as alumina, zirconia, magnesia, and titania have been used as a support. However, when using these materials, there is a problem in that in a decomposition reaction under an elevated temperature environment of 800°C or higher, the support and the supported metal easily aggregate (hereinafter also referred to as "thermal aggregation"), and thus the catalytic activity deteriorates. In addition, in the case of a high concentration of ammonia raw material, there is a problem in that the $NH_3$ conversion ratio is low in a degradation reaction at a relatively low temperature.

Patent Document 1 proposes an ammonia decomposition catalyst which has a base material composed of a specific mayenite-type compound as a support and is capable of improving $NH_3$ conversion ratio (more than doubled) as compared to a typical case where alumina is used as a support. However, with such a method, the $NH_3$ conversion ratio is improved, but since the catalytically active metal particulates directly attach to the surface of the base material, aggregation of the catalytically active metal particulates cannot be sufficiently suppressed, and thus the prevention of deterioration in catalytic activity and the improvement of durability (prolonged life time) have not been realized.

Citation List

Patent Literature

Patent Document 1: WO 2014/045780

Summary of Invention

Technical Problem

An object of the present invention is to provide a structured catalyst for ammonia decomposition capable of favorably maintaining catalytic activity by suppressing aggregation of catalyst particles and efficiently performing a decomposition reaction from ammonia to hydrogen, and a fuel cell using the same.

Solution to Problem

As a result of diligent research to achieve the object described above, the present inventors have found that a structured catalyst for ammonia decomposition used for decomposing ammonia to generate hydrogen can be obtained, and thus completed the present invention based on such finding. The structured catalyst for ammonia decomposition includes a support having a porous structure constituted of a zeolite-type compound, and at least one catalytic substance present inside the support. The support includes channels connecting with each other, and the catalytic substance is metal nanoparticle and present at least in the channels of the support, and thus, the structured catalyst for ammonia decomposition is capable of favorably maintaining catalytic activity by suppressing aggregation of catalyst particles and efficiently performing a decomposition reaction from ammonia to hydrogen.

In other words, the main configurations of the present invention are as follows.

[1] A structured catalyst for ammonia decomposition used for decomposing ammonia to generate hydrogen, including a support having a porous structure constituted of a zeolite-type compound, and at least one catalytic substance present inside the support, wherein the support includes channels connecting with each other, and the catalytic substance is metal nanoparticles and present at least in the channels of the support.

[2] The structured catalyst for ammonia decomposition according to [1], wherein the channels include an enlarged pore portion, and the catalytic substance is present at least in the enlarged pore portion.

[3] The structured catalyst for ammonia decomposition according to [2], wherein the enlarged pore portion causes a plurality of pores constituting any one of the one-dimensional pore, the two-dimensional pore, and the three-dimensional pore to connect with each other.

[4] The structured catalyst for ammonia decomposition according to any one of [1] to [3], wherein the metal nanoparticle is constituted of at least one of ruthenium, iron, cerium, aluminum, nickel, copper, or zinc.

[5] The structured catalyst for ammonia decomposition according to any one of [1] to [4], wherein a mean particle size of the metal nanoparticles is greater than an average inner diameter of the channels and is less than or equal to an inner diameter of the enlarged pore portion.

[6] The structured catalyst for ammonia decomposition according to any one of [1] to [5], wherein a metal element (M) of the metal nanoparticles is contained in an amount from 0.5 to 2.5 mass% based on the structured catalyst.

[7] The structured catalyst for ammonia decomposition according to any one of [1] to [6], wherein the mean particle size of the metal nanoparticles is from 0.08 nm to 30 nm.

[8] The structured catalyst for ammonia decomposition according to [7], wherein the mean particle size of the metal nanoparticles is from 0.5 nm to 11.0 nm.

[9] The structured catalyst for ammonia decomposition according to any one of [1] to [8], wherein a ratio of the mean particle size of the metal nanoparticles to the average inner diameter of the channels is from 0.05 to 300.

[10] The structured catalyst for ammonia decomposition according to [9], wherein the ratio of the mean particle size of the metal nanoparticles to the average inner diameter of the channels is from 0.1 to 30.

[11] The structured catalyst for ammonia decomposition according to [10], wherein the ratio of the mean particle size of the metal nanoparticles to the average inner diameter of the channels is from 1.4 to 3.6.

[12] The structured catalyst for ammonia decomposition according to any one of [1] to [11], wherein the channels include any one of a one-dimensional pore, a two-dimensional pore, and a three-dimensional pore defined by a framework of the zeolite-type compound and an enlarged pore portion having a diameter different from that of any of the one-dimensional pore, the two-dimensional pore, and the three-dimensional pore, the average inner diameter of the channels is from 0.1 nm to 1.5 nm, and the inner diameter of the enlarged pore portion is from 0.5 nm to 50 nm.

[13] The structured catalyst for ammonia decomposition according to any one of [1] to [12], further including at least one other catalytic substance held on an outer surface of the support.

[14] The structured catalyst for ammonia decomposition according to [13], wherein a content of the at least one catalytic substance present inside the support is greater than a content of the at least one other catalytic substance held on the outer surface of the support.

[15] The structured catalyst for ammonia decomposition according to any one of [1] to [14], wherein the zeolite-type compound is a silicate compound.

[16] A fuel cell including the structured catalyst for ammonia decomposition described in any one of [1] to [15].

[17] A method for manufacturing a structured catalyst for ammonia decomposition , including the steps of:

calcinating a precursor material (B) obtained by impregnating, with a metal containing solution, a precursor material (A) for obtaining a support having a porous structure constituted of a zeolite-type compound; and hydrothermally treating a precursor material (C) obtained by calcinating the precursor material (B).

[18] The method for manufacturing a structured catalyst for ammonia decomposition according to [17], wherein from 50 to 500 mass% of a non-ionic surfactant is added to the precursor material (A) before the calcinating.

[19] The method for manufacturing a structured catalyst for ammonia decomposition according to [17] or [18], wherein the precursor material (A) is impregnated with the metal containing solution by adding the metal containing solution to the precursor material (A) in multiple portions before the calcinating.

[20] The method for manufacturing a structured catalyst for ammonia decomposition according to any one of [17] to [19], wherein in impregnating the precursor material (A) with the metal containing solution before the calcinating, an added amount of the metal containing solution added to the precursor material (A), in terms of a ratio of silicon (Si) constituting the precursor material (A) to a metal element (M) contained in the metal containing solution added to the precursor material (A) (a ratio of number of atoms Si/M), is adjusted to from 10 to 1000.

[21] The structured catalyst for ammonia decomposition according to [17], wherein in the hydrothermally treating, the precursor material (C) and a structure directing agent are mixed.

[22] The structured catalyst for ammonia decomposition according to [17], wherein the hydrothermally treating is performed under a basic condition.

Advantageous Effects of Invention

According to the present invention, a structured catalyst for ammonia decomposition capable of favorably maintaining catalytic activity by suppressing aggregation of catalyst particles and efficiently performing a decomposition reaction from ammonia to hydrogen, and a fuel cell using the same can be provided.

Brief Description of Drawings

FIG. 1 is a diagram schematically illustrating a structured catalyst for ammonia decomposition according to an embodiment of the present invention in a way that the inner structure thereof can be seen. FIG. 1A is a perspective view (partially illustrated in cross-section), and FIG. 1B is a partially enlarged cross-sectional view.

FIG. 2 is a partially enlarged cross-sectional view for explaining an example of a function of the structured catalyst for ammonia decomposition of FIG. 1. FIG. 2A is a diagram explaining a sieve function, and FIG. 2B is a diagram explaining catalytic ability.

FIG. 3 is a flowchart illustrating an example of a method for manufacturing the structured catalyst for ammonia decomposition of FIG. 1.

FIG. 4 is a schematic view illustrating a variation of the structured catalyst for ammonia decomposition of FIG. 1.

Description of Embodiments

Hereinafter, embodiments of the present invention will be described in detail with reference to drawings.

Configuration of Structured Catalyst

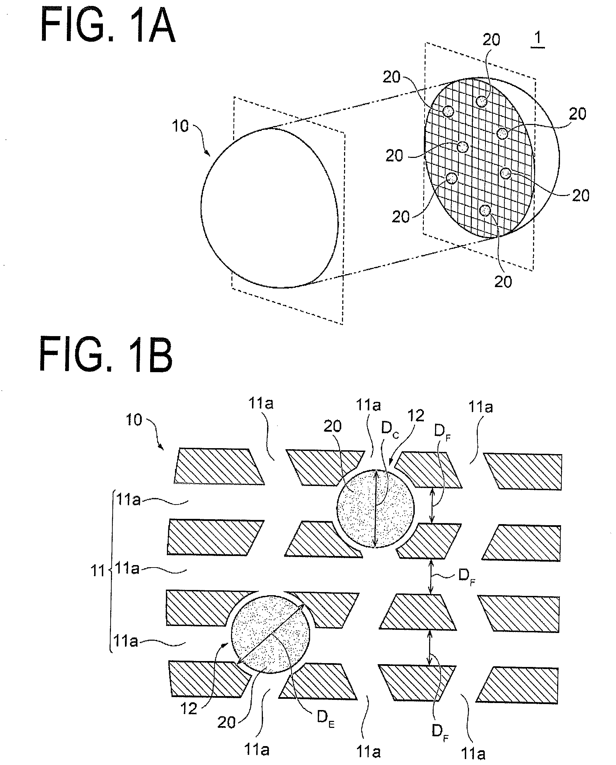

FIG. 1 is a diagram schematically illustrating a configuration of a structured catalyst for ammonia decomposition (hereinafter, simply referred to as "structured catalyst"), according to an embodiment of the present invention, used for decomposing ammonia to generate hydrogen. FIG. 1A is a perspective view (partially illustrated in cross-section), and FIG. 1B is a partially enlarged cross-sectional view. Note that the structured catalyst of FIG. 1 is represented as an example, and the shape, dimension, and the like of each of the configurations according to the present invention are not limited to those illustrated in FIG. 1.

As illustrated in FIG. 1A, a structured catalyst 1 includes a support 10 having a porous structure constituted of a zeolite-type compound, and at least one catalytic substance 20 present inside the support 10.

In the structured catalyst 1, a plurality of catalytic substances 20, 20, ... are embedded in the porous structure of the support 10. The catalytic substance 20 is preferably a substance having catalytic ability (catalytic activity) for an ammonia decomposition reaction when decomposing ammonia to generate hydrogen. Such catalytic substance 20 is metal nanoparticle. The metal nanoparticle will be described in detail below.

The support 10 has a porous structure, and as illustrated in FIG. 1B, suitably has channels 11 connecting with each other by a plurality of pores 11a, 11a, ... being formed. Here, the catalytic substance 20 is present at least in the channels 11 of the support 10, and is preferably held at least in the channels 11 of the skeletal body 10.

With such a configuration, movement of the catalytic substances 20 within the support 10 is restricted, and it is possible to effectively prevent aggregation of the catalytic substances 20. As a result, the decrease in effective surface area of the catalytic substance 20 can be effectively suppressed, and the catalytic activity of the catalytic substance 20 is sustained for a long period of time. In other words, with the structured catalyst 1, the deterioration in catalytic activity due to aggregation of the catalytic substances 20 can be suppressed, and the life time of the structured catalyst 1 can be extended. In addition, due to the long life time of the structured catalyst 1, the replacement frequency of the structured catalyst 1 can be reduced, and the amount of waste of the used structured catalyst 1 can be significantly reduced, which allows saving resources.

Typically, when the structured catalyst is used in fluid, the structured catalyst may receive external force from the fluid. In this case, there is a problem in that in a case where the catalytic substance is only present in a attached state to the outer surface of the support 10, the catalytic substance is easily separated from the outer surface of the support 10 due to the influence of external force from the fluid. In contrast, in the structured catalyst 1, the catalytic substances 20 are present at least in the channels 11 of the support 10, and therefore, even if external force is applied from the fluid, the catalytic substances 20 are less likely to be separated from the support 10. That is, when the structured catalyst 1 is in the fluid, the fluid flows into the channels 11 through the pore 11a of the support 10, thus the speed of the fluid flowing through the channels 11 is considered to be slower than the speed of the fluid flowing on the outer surface of the support 10 due to the flow path resistance (frictional force). Due to the influence of such flow path resistance, the pressure applied by the fluid to the catalytic substance 20 present in the channels 11 becomes lower than the pressure applied by the fluid to the catalytic substance outside of the support 10. As a result, separation of the catalytic substances 20 present inside the support 11 can be effectively suppressed, and the catalytic activity of the catalytic substance 20 can be stably maintained over a long period of time. Note that the flow path resistance as described above is thought to become larger when the channels 11 of the support 10 has a plurality of bends and branches, and the interior of the support 10 becomes a more complex three-dimensional structure.

Furthermore, the channels 11 preferably includes: any one of a one-dimensional pore, a two-dimensional pore, and a three-dimensional pore defined by the framework of the zeolite-type compound; and an enlarged pore portion 12 having a diameter different from that of any of the one-dimensional pore, the two-dimensional pore, and the three-dimensional pore. In this case, the catalytic substance 20 is preferably present at least in the enlarged pore portion 12, and more preferably, is embedded at least in the enlarged pore portion 12. Here, the "one-dimensional pore" refers to a tunnel-type or cage-type pore forming a one-dimensional channel, or a plurality of tunnel-type or cage-type pores (a plurality of one-dimensional channels) forming a plurality of one-dimensional channels. Also, the "two-dimensional pore" refers to a two-dimensional channel in which a plurality of one-dimensional channels are coupled two-dimensionally, and the "three-dimensional pore" refers to a three-dimensional channel in which a plurality of one-dimensional channels are coupled three-dimensionally.

As a result, the movement of the catalytic substance 20 within the support 10 is further restricted, and it is possible to further effectively prevent the separation of the catalytic substance 20 and aggregation of the catalytic substances 20, 20. Embedding refers to a state in which the catalytic substance 20 is encapsulated in the support 10. At this time, the catalytic substance 20 and the support 10 are not necessarily in direct contact with each other, but the catalytic substance 20 may be indirectly held by the support 10 with other substances (e.g., a surfactant, etc.) interposed between the catalytic substance 20 and the support 10.

Although FIG. 1B illustrates a case in which the catalytic substance 20 is embedded in the enlarged pore portion 12, the catalytic substance 20 is not limited to this configuration only, and may be held in the channels 11 with a portion thereof protruding outward of the enlarged pore portion 12. Furthermore, the catalytic substance 20 may be partially embedded or may be held by, for example, fixing in a portion of the channels 11 other than the enlarged pore portion 12 (e.g., in an inner wall portion of the channels 11).

In addition, the enlarged pore portion 12 preferably causes the plurality of pores 11a, 11a constituting any one of the one-dimensional pore, the two-dimensional pore, and the three-dimensional pore to connect with each other. As a result, a separate channel different from the one-dimensional pore, the two-dimensional pore, or the three-dimensional pore is provided in the interior of the support 10, and thus the function of the catalytic substance 20 can be further exhibited.

In addition, the channels 11 are formed three-dimensionally by including a branch portion or a merging portion in the interior of the support 10, and the enlarged pore portion 12 is preferably provided in the branch portion or the merging portion of the channels 11.

The average inner diameter $D_F$ of the channels 11 formed in the support 10 is calculated from the average value of the minor diameter and the major diameter of the pores 11a constituting any of the one-dimensional pore, the two-dimensional pore, and the three-dimensional pore, and for example, is from 0.1 nm to 1.5 nm, and preferably from 0.5 nm to 0.8 nm.

The inner diameter $D_E$ of the enlarged pore portion 12 is, for example, from 0.5 nm to 50 nm, preferably from 1.1 nm to 40 nm, and more preferably from 1.1 nm to 3.3 nm. The inner diameter $D_E$ of the enlarged pore portion 12 depends on, for example, a fine pore diameter of the precursor material (A) described below and the mean particle size Dc of the catalytic substance 20 to be embedded. The inner diameter $D_E$ of the enlarged pore portion 12 is sized so that the catalytic substance 20 can be embedded.

The support 10 is constituted of a zeolite-type compound. Examples of zeolite-type compounds include zeolite analog compounds such as zeolites (aluminosilicates), cation exchanged zeolites, silicate compounds such as silicalite, aluminoborate salts, aluminoarsenate salts, and germanate salts, and phosphate-based zeolite analogous substances such as molybdenum phosphate. Among these, the zeolite-type compound is preferably a silicate compound.

The framework of the zeolite-type compound is selected from FAU type (Y type or X type), MTW type, MFI type (ZSM-5), FER type (ferrierite), LTA type (A type), MWW type (MCM-22), MOR type (mordenite), LTL type (L type), BEA type (beta type) and the like, and preferably is MFI type, and more preferably ZSM-5. A plurality of pores having a pore diameter corresponding to each framework are formed in the zeolite-type compound, and the maximum pore diameter of MFI type is 0.636 nm (6.36 Å) and the average pore diameter is 0.560 nm (5.60 Å), for example.

The catalytic substance 20 will be described in detail below.

The catalytic substance 20 is metal nanoparticles. There are cases where the metal nanoparticles 20 are primary particles and where the metal nanoparticles 20 are secondary particles formed by aggregation of primary particles, but the mean particle size Dc of the metal nanoparticles 20 is preferably larger than the average inner diameter $D_F$ of the channels 11 and is less than or equal to the inner diameter $D_E$ of the enlarged pore portion 12 ($D_F < D_C \leq D_E$). Such metal nanoparticles 20 are suitably embedded in the enlarged pore portion 12 within the channels 11, and the movement of the metal nanoparticles 20 within the support 10 is restricted. Thus, even when the metal nanoparticles 20 receives external force from the fluid, the movement of the metal nanoparticles 20 within the support 10 is restricted, and it is possible to effectively prevent the metal nanoparticles 20, 20, ... embedded in each of the enlarged pore portions 12, 12, ... arranged dispersively in the channels 11 of the support 10 from coming into contact with each other.

In addition, the mean particle size $D_C$ of the metal nanoparticles 20 is preferably from 0.08 nm to 30 nm, more preferably 0.08 nm or larger and less than 25 nm, even more preferably from 0.5 nm to 11.0 nm, and particularly preferably from 0.8 nm to 2.7 nm for both primary particles and secondary particles. Furthermore, the ratio ($D_C/D_F$) of the mean particle size $D_C$ of the metal nanoparticles 20 to the average inner diameter $D_F$ of the channel 11 is preferably from 0.05 to 300, more preferably from 0.1 to 30, even more preferably from 1.1 to 30, and particularly preferably from 1.4 to 3.6.

In addition, the metal element (M) of metal nanoparticle of the catalytic substance 20 is preferably contained in an amount from 0.5 to 2.5 mass% based on the structured catalyst 1, and more preferably from 0.5 to 1.5 mass% based on the structured catalyst 1. For example, when the metal element (M) is Ni, the content of Ni element (mass%) is expressed as (mass of Ni element)/(mass of all elements of structured catalyst 1) $\times$ 100.

The metal nanoparticle may be constituted of a metal that is not oxidized, and may be constituted of a single metal or a mixture of two or more types of metals, for example. Note that in the present specification, the "metal" (as a material) constituting the metal nanoparticles includes an elemental metal containing one type of metal element (M) and a metal alloy containing two or more types of metal elements (M), and the term is a generic term for a metal containing one or more types of metal elements.

Examples of such metals include platinum (Pt), palladium (Pd), ruthenium (Ru), nickel (Ni), cobalt (Co), molybdenum (Mo), tungsten (W), iron (Fe), chromium (Cr), cerium (Ce), copper (Cu), magnesium (Mg), aluminum (Al), and zinc (Zn). It is preferable to mainly contain any one or more types of metals described above. In particular, the metal nanoparticles are preferably nanoparticles composed of ruthenium, iron, cerium, aluminum, nickel, copper, and zinc.

Furthermore, the ratio of silicon (Si) constituting the support 10 to the metal element (M) constituting the metal nanoparticles 20 (the ratio of number of atoms Si/M) is preferably from 10 to 1000, and more preferably from 50 to 200. If the ratio is greater than 1000, the action as the catalytic substance may not be sufficiently achieved, for example, low activity. On the other hand, if the ratio is smaller than 10, the proportion of metal nanoparticles 20 becomes too large, and the strength of the support 10 tends to deteriorate. The metal nanoparticles 20 referred herein are nanoparticles which are held or supported in the interior of the support 10, and do not include metal nanoparticles attached to the outer surface of the support 10.

Function of Structured Catalyst

The structured catalyst 1 includes the support 10 having a porous structure and at least one catalytic substance 20 present inside the support, as described above. The structured catalyst 1 exhibits catalytic ability based on a function of the catalytic substance 20 when the catalytic substance 20 present inside the support contacts the fluid. In particular, the fluid in contact with an outer surface 10a of the structured catalyst 1 flows into the interior of the support 10 through the pore 11a formed in the outer surface 10a and is guided into the channel 11, then travels through the channel 11, and exits from the structured catalyst 1 through another pore 11a. In a pathway where the fluid travels through the channel 11, the fluid comes into contact with the catalytic substance 20 present in the channel 11, and thus a catalytic reaction by the catalytic substance 20 occurs. In addition, the structured catalyst 1 has molecular sieving ability due to the support having a porous structure.

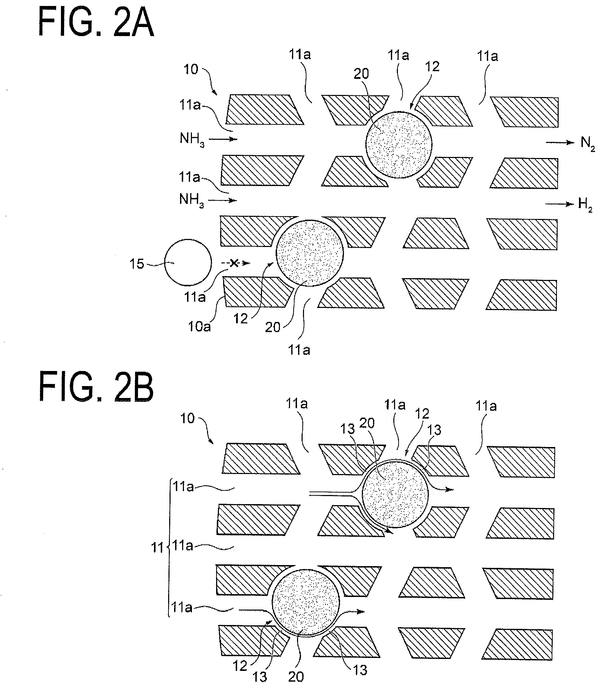

First, a case in which the fluid is gas containing ammonia is described as an example using FIG. 2A for the molecular sieving ability of the structured catalyst 1. Note that "gas containing ammonia" refers to mixed gas containing ammonia and gas other than ammonia.

As illustrated in FIG. 2A, a compound (e.g., ammonia) constituted of molecules having a size that is less than or equal to the pore diameter of the pore 11a, in other words, less than or equal to the inner diameter of the channel 11, can flow into the support 10. On the other hand, a component 15 constituted of molecules having a size exceeding the pore diameter of the pore 11a cannot flow into the support 10. In this way, when the fluid contains a plurality of types of compounds, the reaction of compounds that cannot flow into the support 10 can be restricted and the reaction of compounds capable of flowing into the support 10 can be carried out. In the present embodiment, a decomposition reaction of ammonia proceeds. As a result, synthetic gas containing nitrogen and hydrogen is obtained as a reaction product of the decomposition reaction of ammonia.

In the structured catalyst 1, as illustrated in FIG. 2B, the catalytic substance 20 is embedded in the enlarged pore portion 12 of the channel 11. When the mean particle size $D_C$ of the catalytic substances 20 (metal nanoparticles) is larger than the average inner diameter $D_F$ of the channels 11 and smaller than the inner diameter $D_E$ of the enlarged pore portion 12 ($D_F < D_C < D_E$), a small channel 13 is formed between the metal nanoparticles and the enlarged pore portion 12. Thus, as indicated by arrows in FIG. 2B, the fluid entering the small channel 13 comes into contact with the catalytic substance 20. Since the catalytic substances 20 are embedded in the respective enlarged pore portions 12, the movement within the support 10 is restricted. Thus, aggregation of the catalytic substances 20 in the support 10 is prevented. As a result, a large contact surface area between the catalytic substance 20 and the fluid can be stably maintained.

In the present embodiment, use of the structured catalyst 1 enables to efficiently generate hydrogen by using ammonia as a raw material. This catalytic reaction is carried out at an elevated temperature of, for example, 800°C or higher, but the catalytic substance 20 is hardly affected by heating as the catalytic substance 20 is present inside the support 10. As a result, the deterioration in catalytic activity is suppressed, and the life time of the structured catalyst 1 can be extended.

Method for Manufacturing Structured Catalyst

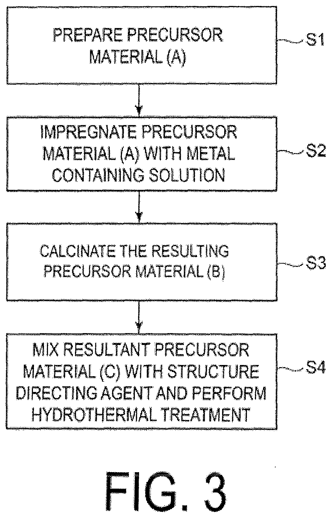

FIG. 3 is a flowchart illustrating an example of a method for manufacturing the structured catalyst 1 of FIG. 1. An example of the method for manufacturing the structured catalyst will be described below.

Step S1: Preparation Step

As illustrated in FIG. 3, a precursor material (A) for obtaining the support having a porous structure constituted of the zeolite-type compound is first prepared. The precursor material (A) is preferably a regular mesopore material, and can be appropriately selected according to the type (composition) of the zeolite-type compound constituting the support of the structured catalyst.

Here, when the zeolite-type compound constituting the support of the structured catalyst is a silicate compound, the regular mesopore material is preferably a compound composed of a Si-O skeletal structure in which a fine pore having a fine pore diameter from 1 nm to 50 nm is uniformly sized and regularly developed one-dimensionally, two-dimensionally, or three-dimensionally. Such a regular mesopore material is obtained as a variety of synthetic materials depending on the synthetic conditions. Specific examples thereof include SBA-1, SBA-15, SBA-16, KIT-6, FSM-16, MCM-41, and the like, and among them, MCM-41 is preferable. Note that the fine pore diameter of SBA-1 is from 10 nm to 30 nm, the fine pore diameter of SBA-15 is from 6 nm to 10 nm, the fine pore diameter of SBA-16 is 6 nm, the fine pore diameter of KIT-6 is 9 nm, the fine pore diameter of FSM-16 is from 3 nm to 5 nm, and the fine pore diameter of MCM-41 is from 1 nm to 10 nm. Examples of such a regular mesopore material include mesoporous silica, mesoporous aluminosilicate, and mesoporous metallosilicate.

The precursor material (A) may be a commercially available product or a synthetic product. When the precursor material (A) is synthesized, it can be synthesized by a known method for synthesizing a regular mesopore material. For example, a mixed solution including a raw material containing the constituent elements of the precursor material (A) and a molding agent for directing the structure of the precursor material (A) is prepared, and the pH is adjusted as necessary to perform hydrothermal treatment (hydrothermal synthesis). Thereafter, the precipitate (product) obtained by the hydrothermal treatment is collected (e.g., filtered), washed and dried as necessary, and then sintered to obtain a precursor material (A) which is a powdery regular mesopore material. Here, examples of the solvent of the mixed solution that can be used include water, an organic solvent such as alcohol, or a mixed solvent thereof. In addition, the raw material is selected depending on the type of the support, and examples thereof include silica agents such as tetraethoxysilane (TEOS), fumed silica, and quartz sand. In addition, various types of surfactants, block copolymers, and the like can be used as the molding agent, and it is preferably selected depending on the type of the synthetic materials of the regular mesopore material. For example, a surfactant such as hexadecyl trimethyl ammonium bromide is preferable for producing MCM-41. The hydrothermal treatment can be performed at 0 to 2000 kPa at 80 to 800°C for 5 hours to 240 hours in a closed vessel, for example. The calcination treatment can be performed in air, at 350 to 850°C for 2 to 30 hours, for example.

Step S2: Impregnating Step

The prepared precursor material (A) is then impregnated with the metal containing solution to obtain a precursor material (B).

The metal containing solution may be a solution containing a metal component (e.g., metal ions) corresponding to the metal element (M) constituting the metal nanoparticles of the structured catalyst, and can be prepared, for example, by dissolving a metal salt containing a metal element (M) in a solvent. Examples of such metal salts include chloride salts, hydroxides, oxides, sulfates, and nitrates. Among these, nitrates are preferable. Examples of the solvent that can be used include water, an organic solvent such as alcohol, or a mixed solvent thereof.

The method for impregnating the precursor material (A) with the metal containing solution is not particularly limited; however, for example, the metal containing solution is preferably added little by little in multiple portions while mixing the powdery precursor material (A) before the calcination step described below. In addition, the surfactant is preferably added to the precursor material (A) as the additive before adding the metal containing solution from the perspective of allowing the metal containing solution to enter into the fine pores of the precursor material (A) more easily. It is believed that such additives serve to cover the outer surface of the precursor material (A) and inhibit the subsequently added metal containing solution from attaching to the outer surface of the precursor material (A), making it easier for the metal containing solution to enter into the fine pores of the precursor material (A).

Examples of such additives include non-ionic surfactants such as polyoxyethylene alkyl ether such as polyoxyethylene oleyl ether, and polyoxyethylene alkylphenyl ether. It is believed that these surfactants do not attach to the interior of the fine pores because the molecular size of these surfactants is too large to enter into the fine pores of the precursor material (A), and thus will not prevent the metal containing solution from entering into the interior of fine pores. As the method for adding the non-ionic surfactant, for example, it is preferable to add from 50 to 500 mass% of the non-ionic surfactant to the precursor material (A) before the calcination step described below. When the added amount of the non-ionic surfactant to the precursor material (A) is less than 50 mass%, the aforementioned suppressing action will not easily occur, and when more than 500 mass% of the non-ionic surfactant is added to the precursor material (A), the viscosity is too high, which is not preferable. Thus, the added amount of the non-ionic surfactant to the precursor material (A) is a value within the range described above.

Furthermore, the added amount of the metal containing solution added to the precursor material (A) is preferably adjusted as appropriate in consideration of the amount of the metal element (M) contained in the metal containing solution with which the precursor material (A) is impregnated (that is, the amount of the metal element (M) to be present inside the precursor material (B)). For example, before the calcination step described below, the added amount of the metal containing solution added to the precursor material (A), in terms of a ratio of silicon (Si) constituting the precursor material (A) to the metal element (M) contained in the metal containing solution added to the precursor material (A) (the ratio of number of atoms Si/M), is preferably adjusted to from 10 to 1000, and more preferably from 50 to 200. For example, if the surfactant is added to the precursor material (A) as the additive before adding the metal containing solution to the precursor material (A), and when the added amount of the metal containing solution added to the precursor material (A), in terms of the ratio of number of atoms Si/M, is set to be from 50 to 200, from 0.5 to 2.5 mass% of the metal element (M) of the metal nanoparticles can be contained based on the structured catalyst. In the state of the precursor material (B), the amount of the metal element (M) present within the fine pores is generally proportional to the added amount of the metal containing solution added to the precursor material (A) if the metal concentration of the metal containing solution, the presence or absence of additives, and other conditions such as temperature, pressure, and the like are the same. The amount of metal element (M) present inside the precursor material (B) is also in a proportional relationship to the amount of metal element constituting the metal nanoparticles present inside the support of the structured catalyst. Thus, by controlling the added amount of the metal containing solution added to the precursor material (A) within the range described above, the metal containing solution can be sufficiently impregnated into the fine pores of the precursor material (A), and thus the amount of metal nanoparticles to be present inside the support of the structured catalyst can be adjusted.

After impregnating the precursor material (A) with the metal containing solution, a washing treatment may be performed as necessary. Examples of washing solution that can be used include water, an organic solvent such as alcohol, or a mixed solvent thereof. Furthermore, it is preferable that after the precursor material (A) is impregnated with the metal containing solution and subjected to the washing treatment as necessary, the precursor material (A) is further subjected to the drying treatment. Drying treatments include overnight natural drying and drying at elevated temperature of 150°C or lower. Note that when calcination treatment described below is performed in the state in which a large amount of moisture contained in the metal containing solution or moisture of the wash solution remains in the precursor material (A), the skeletal structure of the precursor material (A) as the regular mesopore material may be broken, and thus it is preferable to dry the precursor material (A) sufficiently.

Step S3: Calcination Step

Next, a precursor material (C) is produced by calcining the precursor material (B) obtained by impregnating, with the metal containing solution, the precursor material (A) for obtaining the support having a porous structure constituted of the zeolite-type compound.

The calcination treatment is preferably performed in air, at 350 to 850°C for 2 to 30 hours, for example. The metal component impregnated into the pores of the regular mesopore material undergoes crystal growth by such a calcination treatment, and metal nanoparticles are formed in the pores.

Step S4: Hydrothermal Treatment Step

A mixed solution of the precursor material (C) and the structure directing agent is then prepared, and the precursor material (C) obtained by calcinating the precursor material (B) is hydrothermally treated to obtain a structured catalyst.

The structure directing agent is a molding agent for directing the skeletal structure of the support of the structured catalyst, and the surfactant can be used, for example. The structure directing agent is preferably selected depending on the skeletal structure of the support of the structured catalyst, and for example, surfactants such as tetramethylammonium bromide (TMABr), tetraethylammonium bromide (TEABr), and tetrapropylammonium bromide (TPABr) are suitable.

The mixing of the precursor material (C) and the structure directing agent may be performed during the hydrothermal treatment step or may be performed before the hydrothermal treatment step. Furthermore, the method for preparing the mixed solution is not particularly limited, and the precursor material (C), the structure directing agent, and the solvent may be mixed simultaneously, or the precursor material (C) and the structure directing agent may each be dispersed in the solvents and then these dispersions may be mixed. Examples of the solvent that can be used include water, an organic solvent such as alcohols, or a mixed solvent thereof. In addition, it is preferable that the pH of the mixed solution is adjusted using an acid or a base before performing the hydrothermal treatment.

The hydrothermal treatment can be performed by a known method, and is preferably performed at 0 to 2000 kPa at 80 to 800°C for 5 hours to 240 hours in a closed vessel, for example. Furthermore, the hydrothermal treatment is preferably performed under a basic condition.

Although the reaction mechanism here is not necessarily clear, by performing hydrothermal treatment using the precursor material (C) as a raw material, the skeletal structure of the precursor material (C) as the regular mesopore material becomes increasingly disrupted. However, under the action of the structure directing agent, a new skeletal structure (porous structure) is formed as the support of the structured catalyst while roughly maintaining the position of the metal nanoparticles within the fine pores of the precursor material (C). The structured catalyst obtained in this way includes the support having a porous structure and metal nanoparticles present inside the support, and the support includes a channel in which a plurality of pores connect with each other due to the porous structure, and at least a portion of the metal nanoparticles are present in the channel of the support.

Furthermore, in the present embodiment, in the hydrothermal treatment step, a mixed solution in which the precursor material (C) and the structure directing agent are mixed is prepared, and the precursor material (C) is subjected to hydrothermal treatment; however, the embodiment is not limited thereto. The precursor material (C) may be subjected to the hydrothermal treatment without mixing the precursor material (C) and the structure directing agent.

The precipitate (structured catalyst) obtained after the hydrothermal treatment is preferably washed, dried, and sintered as necessary after collection (e.g., filtration). Examples of wash solution that can be used include water, an organic solvent such as alcohol, or a mixed solvent thereof. Drying treatments include overnight natural drying and drying at elevated temperature of 150°C or lower. Note that when calcination treatment is performed in the state in which there is a large amount of moisture remaining in the precipitate, the skeletal structure of the structured catalyst as the support may be broken, and thus it is preferable to dry the precipitate sufficiently. In addition, the calcination treatment can be performed in air, at 350 to 850°C for 2 to 30 hours, for example. During the calcination treatment, the structure directing agent attached to the structured catalyst is burned and removed. Furthermore, the structured catalyst can be used as-is without calcinating the collected precipitate, depending on the intended use. For example, in a case where the environment in which the structured catalyst is used is an elevated temperature environment of an oxidizing atmosphere, exposing the structured catalyst to a usage environment for a certain period of time allows the structure directing agent to be burned and removed and, as a result, a structured catalyst similar to that when subjected to calcination treatment can be produced. Thus, the obtained structured catalyst can be used as-is.

The manufacturing method described above is an example in which the metal element (M) contained in the metal containing solution to be impregnated into the precursor material (A) is a metal species that is hardly oxidized (e.g., a precious metal).

When the metal element (M) contained in the metal containing solution to be impregnated into the precursor material (A) is a metal species that is easily oxidized (e.g., Fe, Ni, and the like), a reduction treatment is preferably performed after the hydrothermal treatment (Step S5: Reduction Treatment Step). When the metal element (M) contained in the metal containing solution is a metal species that is easily oxidized, the metal component is oxidized by the heat treatment in the step (Steps S3 and S4) after the impregnating treatment (Step S2). Therefore, metal oxide nanoparticles are present inside the support formed in the hydrothermal treatment step (Step S4). Thus, to obtain a structured catalyst in which metal nanoparticles are present inside the support, it is desirable to subject the collected precipitate to calcination treatment after the hydrothermal treatment, and then to reduction treatment in a reducing gas atmosphere such as hydrogen gas. By performing the reduction treatment, the metal oxide nanoparticles present inside the support are reduced, and metal nanoparticles corresponding to the metal element (M) constituting the metal oxide nanoparticles are formed. As a result, a structured catalyst in which metal nanoparticles are present inside a support is obtained. Note that such reduction treatment may be performed as necessary, and when the environment in which the structured catalyst is used is a reducing atmosphere, for example, the metal oxide nanoparticles are reduced by exposure to the usage environment for a certain period of time. In this case, a structured catalyst similar to that when subjected to the reduction treatment is obtained, and thus the structured catalyst can be used as-is in a state in which the oxide nanoparticles are present inside the support.

Variation of Structured Catalyst 1

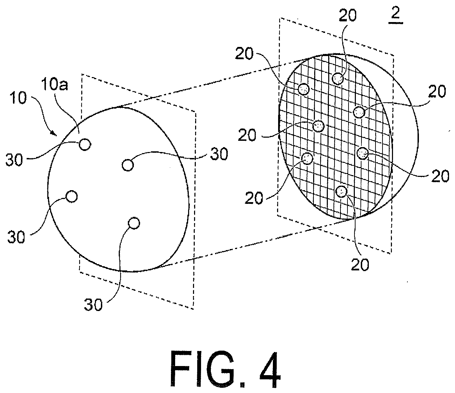

FIG. 4 is a schematic view illustrating a variation of the structured catalyst 1 of FIG. 1.

Although the structured catalyst 1 of FIG. 1 illustrates the case in which the structured catalyst 1 includes the support 10 and the catalytic substance 20 present inside the support 10, the configuration thereof is not limited thereto. For example, as illustrated in FIG. 4, a structured catalyst 2 may further include at least one other catalytic substance 30 held on the outer surface 10a of the support 10.

This catalytic substance 30 is a substance that exhibits one or a plurality of catalytic abilities. The catalytic ability of the other catalytic substance 30 may be the same as or different from the catalytic ability of the catalytic substance 20. When both of the catalytic substances 20 and 30 are substances having the same catalytic ability, the material of the other catalytic substance 30 may be the same as or different from the material of the catalytic substance 20. With this configuration, the content of catalytic substances held in the structured catalyst 2 can be increased, and the catalytic activity of the catalytic substance can be further promoted.

In this case, the content of the catalytic substance 20 present inside the support 10 is preferably greater than the content of the at least one other catalytic substance 30 held on the outer surface 10a of the support 10. As a result, the catalytic ability of the catalytic substance 20 held in the interior of the support 10 becomes dominant, and the catalytic ability of the catalytic substances is stably exhibited.

The structured catalyst according to an embodiment of the present invention has been described above, but the present invention is not limited to the above embodiments, and various modifications and changes are possible based on the technical concept of the present invention.

For example, a manufacturing apparatus including the above-described structured catalyst may be provided. Specific examples of the manufacturing apparatus include fuel cells, and fuel cells for automobiles are particularly suitable. By using the structured catalyst in a catalytic reaction using such a manufacturing apparatus, similar effects to that described above can be achieved.

Examples

Examples 1 to 384

Synthesis of Precursor Material (A)

A mixed aqueous solution was prepared by mixing a silica agent (tetraethoxysilane (TEOS), available from Wako Pure Chemical Industries, Ltd.) and a surfactant as the molding agent. After pH adjustment was performed as appropriate, hydrothermal treatment was performed at 80 to 350°C for 100 hours in a closed vessel. Thereafter, the produced precipitate was filtered out, washed with water and ethanol, and then sintered in air at 600°C for 24 hours. As a result, the precursor material (A) of the type and having the pore diameter shown in Tables 1 to 8 was obtained. Note that the following surfactants were used depending on the type of the precursor material (A) ("Type of Precursor Material (A): Surfactant").

- MCM-41: Hexadecyltrimethylammonium bromide (CTAB) (available from Wako Pure Chemical Industries, Ltd.)
- SBA-1: Pluronic P123 (available from BASF)

Fabrication of Precursor Materials (B) and (C)

Next, for each of metal elements (M) constituting metal nanoparticles of the types shown in Tables 1 to 8, metal containing aqueous solution was prepared by dissolving a metal salt containing the metal element (M) in water. Note that the following metal salts were used depending on the type of metal nanoparticles ("Metal Nanoparticles: Metal Salt").

- Co: cobalt (II) nitrate hexahydrate (available from Wako Pure Chemical Industries, Ltd.)
- Ni: nickel (II) nitrate hexahydrate (available from Wako Pure Chemical Industries, Ltd.)
- Fe: iron (III) nitrate nonahydrate (available from Wako Pure Chemical Industries, Ltd.)
- Ru: ruthenium (III) chloride n-hydrate (available from Wako Pure Chemical Industries, Ltd.)

Next, a metal containing solution was added to the powdery precursor material (A) little by little in multiple portions, and dried at room temperature (20°C $\pm$ 10°C) for 12 hours or longer to produce the precursor material (B).

Note that when the presence or absence of additives shown in Tables 1 to 8 is "Yes", pretreatment was performed in which an aqueous solution of polyoxyethylene (15) oleyl ether (NIKKOL BO-15 V, available from Nikko Chemicals Co., Ltd.) is added as the additive to the precursor material (A) before adding the metal containing aqueous solution, and then the metal containing aqueous solution was added as described above. Note that when the presence or absence of additives is "No", pretreatment with the additive described above was not performed.

Furthermore, the added amount of the metal containing aqueous solution added to the precursor material (A), in terms of a ratio of silicon (Si) constituting the precursor material (A) to a metal element (M) contained in the metal containing aqueous solution (a ratio of number of atoms Si/M), was adjusted to be values shown in Tables 1 to 8.

Next, the precursor material (B) impregnated with the metal containing aqueous solution obtained as described above was sintered in air at 600°C for 24 hours and the precursor material (C) was produced.

The precursor material (C) obtained as described above and the structure directing agent shown in Tables 1 to 8 were mixed to produce a mixed aqueous solution, then the hydrothermal treatment was performed thereon under the conditions of at 80 to 350°C, at pH and time shown in Tables 1 to 8 in a closed vessel. Thereafter, the produced precipitate was filtered off, washed with water, dried at 100°C for 12 hours or longer, and then sintered in air at 600°C for 24 hours. The sintered product was then collected and subjected to the reduction treatment under the inflow of hydrogen gas at 400°C for 350 minutes and structured catalysts including the support and metal nanoparticles as a catalytic substance shown in Tables 1 to 8 were produced (Examples 1 to 384).

Comparative Example 1

In Comparative Example 1, cobalt (II, III) oxide powder having a mean particle size of 50 nm or less (available from Sigma-Aldrich Japan LLC) was mixed with MFI type silicalite to obtain a functional structural body in which cobalt oxide nanoparticles were attached as the functional substance to the outer surface of the silicalite as the skeletal body. MFI type silicalite was synthesized in the similar manner to Examples 52 to 57 except for a step of adding a metal.

Comparative Example 2

In Comparative Example 2, MFI type silicalite was synthesized in the similar manner to Comparative Example 1 except that the step of attaching the cobalt oxide nanoparticles was omitted.

Evaluation

Various characteristic evaluations were performed under the conditions described below on the structured catalysts of Examples and Comparative Examples including the support and the catalytic substance, as well as the support itself of a reference example.

A. Cross sectional observation

Samples for observation were produced using a pulverization method for the structured catalysts of Examples and Comparative Examples including the support and the catalytic substance, as well as the support itself of a reference example, and cross sectional observation was performed using a transmission electron microscope (TEM) (TITAN G2, available from FEI).

As a result, it was confirmed that, in the structured catalysts of Examples, the catalytic substance was present and held in the interior of the support constituted of silicalite. On the other hand, in the structured catalysts of Comparative Examples, the catalytic substance was only attached to the outer surface of the support and was not present in the interior of the support.

In addition, of the Examples described above, the structured catalyst in which the metal is Fe was cut by focused ion beam (FIB) processing to expose a cross section, and cross-sectional elemental analysis was performed using SEM (SU8020, available from Hitachi High-Technologies Corporation) and EDX (X-Max, available from Horiba, Ltd.). As a result, element Fe was detected from the interior of the skeletal body.

It was confirmed that Fe nanoparticles were present in the interior of the support from the results of the cross sectional observation using TEM and SEM/EDX.

In addition, small angle X-ray scattering (SAXS) analysis was performed to reveal the mean particle size and dispersion state of the catalytic substance. The SAXS measurement was performed using a Spring-8 beam line BL19B2. The obtained SAXS data was fitted with a spherical model using the Guinier approximation, and the particle size was calculated. The particle size was measured for the structured catalyst in which the metal is Fe nanoparticles. Furthermore, as a comparative reference, a commercially available $Fe_2O_3$ nanoparticles (available from Wako) was observed and measured on SEM.

As a result, in a commercially available product, various sizes of $Fe_2O_3$ nanoparticles in a range of particle sizes of approximately 50 nm to 400 nm were randomly present, whereas in the structured catalysts of each Example having a mean particle size from 1.2 nm to 2.0 nm determined from the TEM image, scattering peaks with particle sizes of 10 nm or less were detected even in the measurement results of SAXS. From the results of SAXS measurement and the SEM/EDX cross sectional measurement, it was found that catalytic substances having a particle size of 10 nm or less were present in the interior of the support in a highly dispersed state and the catalytic substances are uniform in particle size.

B. Relationship between added amount of metal containing solution and amount of metal embedded in interior of skeletal body

A structured catalyst in which metal nanoparticles were embedded in the interior of the support at added amount in terms of the ratio of number of atoms Si/M = 50, 100, 200, 1000 (M = Ni, Fe, Ru) was produced, and then the amount of metal (mass%) embedded in the interior of the support of the structured catalyst produced at the above added amount was measured. Note that in the present measurement, functional structural bodies having the ratio of number of atoms Si/M = 100, 200, 1000 were respectively produced by adjusting the added amount of the metal containing solution in a similar manner to the structured catalysts having the ratio of number of atoms Si/M = 100, 200, 1000 of Examples 1 to 384, and a structured catalyst having the ratio of number of atoms Si/M = 50 was produced in a similar manner to the structured catalysts having the ratio of number of atoms Si/M = 100, 200, 1000 except that the added amount of the metal containing solution was changed.

The metal was quantified by high-frequency inductively coupled plasma (ICP) alone or in combination with ICP and X-ray fluorescence analysis (XRF). XRF (energy dispersive X-ray fluorescence analyzer "SEA1200VX", available from SSI Nanotechnology) was performed under conditions of a vacuum atmosphere, an accelerating voltage of 15 kV (using a Cr filter), or an accelerating voltage of 50 kV (using a Pb filter).

XRF is a method for calculating the amount of metal present based on fluorescence intensity, and XRF alone cannot calculate a quantitative value (in terms of mass%). Therefore, the metal content of the structured catalyst to which the metal was added at Si/M = 100 was determined by ICP analysis, and the metal content of the structured catalyst to which the metal was added at Si/M = 50 and less than 100 was calculated based on XRF measurement results and ICP measurement results.

As a result, it was confirmed that the amount of metal embedded in the structure increased as the added amount of the metal containing solution increased, at least within a range that the ratio of numbers of atom Si/M was from 50 to 1000.

C. Average inner diameter of channel of support and mean particle size of catalytic substance

In the TEM image taken in the cross sectional observation performed in evaluation A above, 500 channels of the support were randomly selected, and the respective major diameters and minor diameters were measured, and the respective inner diameters were calculated from the average values (N = 500), and then the average value of the inner diameters was determined as the average inner diameter $D_F$ of the channel of the support. Also for the catalytic substances, 500 sections of catalytic substance were randomly selected from the TEM image, and the respective particle sizes were measured (N = 500), and the average value thereof was determined as the mean particle size $D_C$ of the catalytic substance. The results are shown in Tables 1 to 8.

D. Performance evaluation

The catalytic ability of the catalytic substance was evaluated for the structured catalysts of Examples and Comparative Examples including the support and the catalytic substance. The results are shown in Tables 1 to 8.

1. Catalytic activity

The catalytic activity was evaluated under the following conditions.

First, 100 mg of the structured catalyst was filled in an atmospheric pressure flow type reactor, and an ammonia decomposition reaction was performed by supplying ammonia gas having a volume fraction of ammonia of 100% to the structured catalyst at 50 mL/min, at 700°C for 2 hours.

After completion of the reaction, composition analysis for the collected generated gas was performed by using gas chromatography mass spectrometry (GC/MS). Note that TRACE 1310GC (available from Thermo Fischer Scientific K.K., detector: thermal conductivity detector) was used as the analysis apparatus for the generated gas.

Based on the results of the above composition analysis, $NH_3$ conversion ratio (%) was calculated. Note that the $NH_3$ conversion ratio was calculated using the following equation (1).

$$NH_3 \text{ conversion ratio (\%)} = 100 \times (P_{NH3} - P'_{NH3})/(P_{NH3} + P'_{NH3}) \ldots (1)$$

Note that in Equation (1) above, $P_{NH3}$ represents ammonia partial pressure before reaction, and $P'_{NH3}$ represents ammonia partial pressure after reaction.

In the examples, the catalytic activity is determined based on the ammonia conversion ratio. When the $NH_3$ conversion ratio is 80% or greater, it is determined that catalytic activity (decomposition ability) is excellent, and considered as "A". When it is 65% or higher and less than 80%, it is determined that catalytic activity is good, and considered as "B". When it is 50% or higher and less than 65%, it is determined that catalytic activity is not good, but is in a pass level (acceptable), and considered as "C". When it is less than 50%, it is determined that catalytic activity is poor (not pass), and considered as "D".

2. Durability (life time)

The durability was evaluated under the following conditions.

First, the structured catalyst used in evaluation (1) was recovered and heated at 650°C for 12 hours to produce a structured catalyst after heating. Next, the ammonia decomposition reaction was performed in a similar manner to that performed in evaluation (1) using the obtained structured catalyst after heating, and then, composition analysis of the generated gas was performed in a similar manner to that performed in evaluation (1).

Based on the obtained analytical results, the $NH_3$ conversion ratio (%) was determined in a similar manner to evaluation (1). Furthermore, comparison of degrees of maintaining of the $NH_3$ conversion ratio was performed by comparing the $NH_3$ conversion ratio of the structured catalyst after heating with the $NH_3$ conversion ratio of the structured catalyst before heating ($NH_3$ conversion ratio determined in evaluation (1)). Specifically, the percentage (%) of the $NH_3$ conversion ratio of the structured catalyst after heating ($NH_3$ conversion ratio determined in evaluation (2)) to the $NH_3$ conversion ratio of the structured catalyst before heating ($NH_3$ conversion ratio determined in evaluation (1)) was calculated.

In the examples, when $NH_3$ conversion ratio of the structured catalyst after heating ($NH_3$ conversion ratio determined in evaluation (2)) is maintained at least 80% compared to the $NH_3$ conversion ratio of the structured catalyst before heating ($NH_3$ conversion ratio determined in evaluation (1)), it is determined that durability (heat resistance) is excellent, and considered as "A". When it is maintained 60% or more and less than 80%, it is determined that durability (heat resistance) is good, and considered as "B". When it is maintained 40% or more and less than 60%, it is determined that durability (heat resistance) is not good, but is in a pass level (acceptable), and considered as "C". When it is reduced below 40%, it is determined that durability (heat resistance) is poor (not pass), and considered as "D".

Performance evaluations similar to evaluations (1) and (2) were also performed on Comparative Examples 1 and 2. Note that Comparative Example 2 contains the support only, and do not contain the catalytic substance. Therefore, in the performance evaluation described above, only the support of Comparative Example 2 was charged in place of the structured catalyst. The results are shown in Table 8.

[Table 1]

| No. | Manufacturing Conditions of Structured Catalyst | | | | | | | Structured Catalyst | | | | | Performance Evaluation | |
| | Precursor Material (A) | | Addition to Precursor Material (A) | | Conditions of Hydrothermal Treatment using Precursor Material (C) | | | Support / Zeolite-Type Compound | | Catalytic Substance / Metal Nanoparticles | | DC/DF | | |
| | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels DF (nm) | Type | Mean Particle Size DC (nm) | | Catalytic Activity | Durability |
|---|---|---|---|---|---|---|---|---|---|---|---|---|---|---|
| Example 1 | MCM-41 | 1.3 | Yes | 1000 | TEABr | 12 | 120 | FAU | 0.74 | Co | 0.11 | 0.1 | C | C |
| Example 2 | | 1.3 | | 500 | | | | | | | 0.32 | 0.4 | C | C |
| Example 3 | | 1.3 | | 200 | | | | | | | 0.53 | 0.7 | B | C |
| Example 4 | | 2.0 | | 100 | | | | | | | 1.06 | 1.4 | A | B |
| Example 5 | | 2.0 | | 100 | | | | | | | 1.59 | 2.1 | A | B |
| Example 6 | | 2.4 | | 100 | | | | | | | 1.90 | 2.6 | A | A |
| Example 7 | | 2.6 | | 100 | | | | | | | 2.11 | 2.9 | A | A |
| Example 8 | | 3.3 | | 100 | | | | | | | 2.64 | 3.6 | A | A |
| Example 9 | | 6.6 | | 100 | | | | | | | 5.29 | 7.1 | B | A |
| Example 10 | SBA-1 | 13.2 | | | | | | | | | 10.57 | 14.3 | B | A |
| Example 11 | SBA-1 | 19.8 | | | | | | | | | 15.86 | 21.4 | C | A |
| Example 12 | SBA-1 | 26.4 | | | | | | | | | 21.14 | 28.6 | C | A |
| Example 13 | MCM-41 | 1.3 | No | 1000 | | | | | | | 0.11 | 0.1 | C | C |
| Example 14 | | 1.3 | | 500 | | | | | | | 0.32 | 0.4 | C | C |
| Example 15 | | 1.3 | | 200 | | | | | | | 0.53 | 0.7 | B | C |
| Example 16 | | 2.0 | | 100 | | | | | | | 1.06 | 1.4 | A | B |
| Example 17 | | 2.0 | | 100 | | | | | | | 1.59 | 2.1 | A | B |
| Example 18 | | 2.4 | | 100 | | | | | | | 1.90 | 2.6 | B | A |
| Example 19 | | 2.6 | | 100 | | | | | | | 2.11 | 2.9 | B | A |
| Example 20 | | 3.3 | | 100 | | | | | | | 2.64 | 3.6 | B | A |
| Example 21 | | 6.6 | | 100 | | | | | | | 5.29 | 7.1 | C | A |
| Example 22 | SBA-1 | 13.2 | | | | | | | | | 10.57 | 14.3 | C | A |
| Example 23 | SBA-1 | 19.8 | | | | | | | | | 15.86 | 21.4 | C | A |
| Example 24 | SBA-1 | 26.4 | | | | | | | | | 21.14 | 28.6 | C | A |
| Example 25 | MCM-41 | 1.1 | Yes | 1000 | | 11 | 72 | MTW | 0.61 | | 0.09 | 0.1 | C | C |
| Example 26 | | 1.1 | | 500 | | | | | | | 0.26 | 0.4 | C | C |
| Example 27 | | 1.1 | | 200 | | | | | | | 0.44 | 0.7 | B | C |
| Example 28 | | 1.1 | | 100 | | | | | | | 0.87 | 1.4 | A | B |
| Example 29 | | 1.6 | | 100 | | | | | | | 1.31 | 2.1 | A | B |
| Example 30 | | 2.0 | | 100 | | | | | | | 1.57 | 2.6 | A | B |
| Example 31 | | 2.2 | | 100 | | | | | | | 1.74 | 2.9 | A | A |
| Example 32 | | 2.7 | | 100 | | | | | | | 2.18 | 3.6 | A | A |

| No. | Type | Pore Diameter (nm) | Presence or Absence of Additives | Conversion Ratio of Added Amount of Metal containing Solution (Ratio of Number of Atoms) Si/M | $D_C$ | $D_C/D_F$ | Catalytic Activity | Durability |
|---|---|---|---|---|---|---|---|---|
| Example 33 | | 5.4 | | | 4.36 | 7.1 | B | A |
| Example 34 | | 10.9 | | | 8.71 | 14.3 | B | A |
| Example 35 | SBA-1 | 16.3 | | | 13.07 | 21.4 | C | A |
| Example 36 | | 21.8 | | | 17.43 | 28.6 | C | A |
| Example 37 | | | | 1000 | 0.09 | 0.1 | C | C |
| Example 38 | | 1.1 | | 500 | 0.26 | 0.4 | C | C |
| Example 39 | | | | 200 | 0.44 | 0.7 | B | C |
| Example 40 | | | | | 0.87 | 1.4 | A | B |
| Example 41 | MCM-41 | 1.6 | | | 1.31 | 2.1 | A | B |
| Example 42 | | 2.0 | No | | 1.57 | 2.6 | A | B |
| Example 43 | | 2.2 | | | 1.74 | 2.9 | B | A |
| Example 44 | | 2.7 | | 100 | 2.18 | 3.6 | B | A |
| Example 45 | | 5.4 | | | 4.36 | 7.1 | C | A |
| Example 46 | | 10.9 | | | 8.71 | 14.3 | C | A |
| Example 47 | SBA-1 | 16.3 | | | 13.07 | 21.4 | C | A |
| Example 48 | | 21.8 | | | 17.43 | 28.6 | C | A |

[Table 2]

| No. | Manufacturing Conditions of Structured Catalyst | | | | | | | Structured Catalyst | | | | Performance Evaluation | |
|---|---|---|---|---|---|---|---|---|---|---|---|---|---|
| | Precursor Material (A) | | Addition to Precursor Material (A) | | Conditions of Hydrothermal Treatment using Precursor Material (C) | | | Support | | Catalytic Substance | | | |
| | | | | | | | | Zeolite-Type Compound | | Metal Nanoparticles | | | |
| | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels $D_F$ (nm) | Type | Mean Particle Size $D_C$ (nm) | $D_C/D_F$ | Catalytic Activity | Durability |
| Example 49 | | | | 1000 | | | | | | | 0.08 | 0.1 | C | C |
| Example 50 | | 1.0 | | 500 | | | | | | | 0.24 | 0.4 | C | C |
| Example 51 | | | | 200 | | | | | | | 0.40 | 0.7 | B | C |
| Example 52 | | | | | | | | | | | 0.80 | 1.4 | A | B |
| Example 53 | MCM-41 | 1.5 | Yes | | TPABr | 12 | 72 | MFI | 0.56 | Co | 1.20 | 2.1 | A | B |
| Example 54 | | 1.8 | | 100 | | | | | | | 1.44 | 2.6 | A | A |
| Example 55 | | 2.0 | | | | | | | | | 1.60 | 2.9 | A | A |
| Example 56 | | 2.5 | | | | | | | | | 2.00 | 3.6 | A | A |
| Example 57 | | 5.0 | | | | | | | | | 4.00 | 7.1 | B | A |

| Example | | | | | | | | | | | | | |
|---|---|---|---|---|---|---|---|---|---|---|---|---|---|
| Example 58 | | 10.0 | | | | | | | | | 8.00 | 14.3 | B | A |
| Example 59 | SBA-1 | 15.0 | | | | | | | | | 12.00 | 21.4 | C | A |
| Example 60 | | 20.0 | | | | | | | | | 16.00 | 28.6 | C | A |
| Example 61 | | | | 1000 | | | | | | | 0.08 | 0.1 | C | C |
| Example 62 | | 1.0 | | 500 | | | | | | | 0.24 | 0.4 | C | C |
| Example 63 | | | | 200 | | | | | | | 0.40 | 0.7 | B | C |
| Example 64 | | | | | | | | | | | 0.80 | 1.4 | A | B |
| Example 65 | MCM-41 | 1.5 | | | | | | | | | 1.20 | 2.1 | A | B |
| Example 66 | | 1.8 | No | | | | | | | | 1.44 | 2.6 | B | A |
| Example 67 | | 2.0 | | | | | | | | | 1.60 | 2.9 | B | A |
| Example 68 | | 2.5 | | 100 | | | | | | | 2.00 | 3.6 | B | A |
| Example 69 | | 5.0 | | | | | | | | | 4.00 | 7.1 | C | A |
| Example 70 | | 10.0 | | | | | | | | | 8.00 | 14.3 | C | A |
| Example 71 | SBA-1 | 15.0 | | | | | | | | | 12.00 | 21.4 | C | A |
| Example 72 | | 20.0 | | | | | | | | | 16.00 | 28.6 | C | A |
| Example 73 | | | | 1000 | | | | | | | 0.08 | 0.1 | C | C |
| Example 74 | | 1.0 | | 500 | | | | | | | 0.24 | 0.4 | C | C |
| Example 75 | | | | 200 | | | | | | | 0.41 | 0.7 | B | C |
| Example 76 | | | | | | | | | | | 0.81 | 1.4 | A | B |
| Example 77 | MCM-41 | 1.5 | Yes | | TMABr | 12 | 120 | FER | 0.57 | | 1.22 | 2.1 | A | B |
| Example 78 | | 1.8 | | 100 | | | | | | | 1.47 | 2.6 | A | B |
| Example 79 | | 2.0 | | | | | | | | | 1.63 | 2.9 | A | A |
| Example 80 | | 2.5 | | | | | | | | | 2.04 | 3.6 | A | A |

| Example | | | | | | | | | | | | | |
|---|---|---|---|---|---|---|---|---|---|---|---|---|---|
| Example 81 | | 5.1 | | | | | | | | | 4.07 | 7.1 | B | A |
| Example 82 | | 10.2 | | | | | | | | | 8.14 | 14.3 | B | A |
| Example 83 | SBA-1 | 15.3 | | | | | | | | | 12.21 | 21.4 | C | A |
| Example 84 | | 20.4 | | | | | | | | | 16.29 | 28.6 | C | A |
| Example 85 | | | | 1000 | | | | | | | 0.08 | 0.1 | C | C |
| Example 86 | | 1.0 | | 500 | | | | | | | 0.24 | 0.4 | C | C |
| Example 87 | | | | 200 | | | | | | | 0.41 | 0.7 | B | C |
| Example 88 | | | | | | | | | | | 0.81 | 1.4 | A | B |
| Example 89 | MCM-41 | 1.5 | | | | | | | | | 1.22 | 2.1 | A | B |
| Example 90 | | 1.8 | No | | | | | | | | 1.47 | 2.6 | A | B |
| Example 91 | | 2.0 | | | | | | | | | 1.63 | 2.9 | B | A |
| Example 92 | | 2.5 | | 100 | | | | | | | 2.04 | 3.6 | B | A |
| Example 93 | | 5.1 | | | | | | | | | 4.07 | 7.1 | C | A |
| Example 94 | | 10.2 | | | | | | | | | 8.14 | 14.3 | C | A |
| Example 95 | SBA-1 | 15.3 | | | | | | | | | 12.21 | 21.4 | C | A |
| Example 96 | | 20.4 | | | | | | | | | 16.29 | 28.6 | C | A |

[Table 3]

| No. | Manufacturing Conditions of Structured Catalyst | | | | | | | Structured Catalyst | | | | | Performance Evaluation | |
|---|---|---|---|---|---|---|---|---|---|---|---|---|---|---|
| | Precursor Material (A) | | Addition to Precursor Material (A) | | Conditions of Hydrothermal Treatment using Precursor Material (C) | | | Support — Zeolite-Type Compound | | Catalytic Substance — Metal Nanoparticles | | $D_C/D_F$ | Catalytic Activity | Durability |
| | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels $D_F$ (nm) | Type | Mean Particle Size $D_C$ (nm) | | | |
| Example 97 | MCM-41 | 1.3 | Yes | 1000 | TEABr | 12 | 120 | FAU | 0.74 | Ni | 0.11 | 0.1 | C | C |
| Example 98 | | 1.3 | | 500 | | | | | | | 0.32 | 0.4 | C | C |
| Example 99 | | 1.3 | | 200 | | | | | | | 0.53 | 0.7 | B | C |
| Example 100 | | | | | | | | | | | 1.06 | 1.4 | A | B |
| Example 101 | MCM-41 | 2.0 | | | | | | | | | 1.59 | 2.1 | A | B |
| Example 102 | | 2.4 | | 100 | | | | | | | 1.90 | 2.6 | A | A |
| Example 103 | | 2.6 | | | | | | | | | 2.11 | 2.9 | A | A |
| Example 104 | | 3.3 | | | | | | | | | 2.64 | 3.6 | A | A |
| Example 105 | | 6.6 | | | | | | | | | 5.29 | 7.1 | B | A |
| Example 106 | | 13.2 | | | | | | | | | 10.57 | 14.3 | B | A |
| Example 107 | SBA-1 | 19.8 | | | | | | | | | 15.86 | 21.4 | C | A |
| Example 108 | | 26.4 | | | | | | | | | 21.14 | 28.6 | C | A |
| Example 109 | | | | 1000 | | | | | | | 0.11 | 0.1 | C | C |
| Example 110 | | 1.3 | | 500 | | | | | | | 0.32 | 0.4 | C | C |
| Example 111 | | 1.3 | | 200 | | | | | | | 0.53 | 0.7 | B | C |
| Example 112 | | | No | | | | | | | | 1.06 | 1.4 | A | B |
| Example 113 | MCM-41 | 2.0 | | | | | | | | | 1.59 | 2.1 | A | B |
| Example 114 | | 2.4 | | | | | | | | | 1.90 | 2.6 | B | A |
| Example 115 | | 2.6 | | 100 | | | | | | | 2.11 | 2.9 | B | A |
| Example 116 | | 3.3 | | | | | | | | | 2.64 | 3.6 | B | A |
| Example 117 | | 6.6 | | | | | | | | | 5.29 | 7.1 | C | A |
| Example 118 | | 13.2 | | | | | | | | | 10.57 | 14.3 | C | A |
| Example 119 | SBA-1 | 19.8 | | | | | | | | | 15.86 | 21.4 | C | A |
| Example 120 | | 26.4 | | | | | | | | | 21.14 | 28.6 | C | A |
| Example 121 | | | | 1000 | | | | | | | 0.09 | 0.1 | C | C |
| Example 122 | | 1.1 | | 500 | | | | | | | 0.26 | 0.4 | C | C |
| Example 123 | | 1.1 | | 200 | | | | | | | 0.44 | 0.7 | B | C |
| Example 124 | | | | | | | | | | | 0.87 | 1.4 | A | B |
| Example 125 | MCM-41 | 1.6 | Yes | | | 11 | 72 | MTW | 0.61 | | 1.31 | 2.1 | A | B |
| Example 126 | | 2.0 | | 100 | | | | | | | 1.57 | 2.6 | A | B |
| Example 127 | | 2.2 | | | | | | | | | 1.74 | 2.9 | A | A |
| Example 128 | | 2.7 | | | | | | | | | 2.18 | 3.6 | A | A |

| No. | Type | Pore Diameter (nm) | Presence or Absence of Additives | Conversion Ratio | Mean Particle Size Dc | Dc/DF | Catalytic Activity | Durability |
|---|---|---|---|---|---|---|---|---|
| Example 129 | | 5.4 | | | 4.36 | 7.1 | B | A |
| Example 130 | | 10.9 | | | 8.71 | 14.3 | B | A |
| Example 131 | SBA-1 | 16.3 | | | 13.07 | 21.4 | C | A |
| Example 132 | | 21.8 | | | 17.43 | 28.6 | C | A |
| Example 133 | | | | 1000 | 0.09 | 0.1 | C | C |
| Example 134 | | 1.1 | | 500 | 0.26 | 0.4 | C | C |
| Example 135 | | | | 200 | 0.44 | 0.7 | B | C |
| Example 136 | | | | | 0.87 | 1.4 | A | B |
| Example 137 | MCM-41 | 1.6 | | | 1.31 | 2.1 | A | B |
| Example 138 | | 2.0 | No | | 1.57 | 2.6 | A | B |
| Example 139 | | 2.2 | | | 1.74 | 2.9 | B | A |
| Example 140 | | 2.7 | | 100 | 2.18 | 3.6 | B | A |
| Example 141 | | 5.4 | | | 4.36 | 7.1 | C | A |
| Example 142 | | 10.9 | | | 8.71 | 14.3 | C | A |
| Example 143 | SBA-1 | 16.3 | | | 13.07 | 21.4 | C | A |
| Example 144 | | 21.8 | | | 17.43 | 28.6 | C | A |

[Table 4]

| No. | Manufacturing Conditions of Structured Catalyst | | | | | | | Structured Catalyst | | | | | Performance Evaluation | |
|---|---|---|---|---|---|---|---|---|---|---|---|---|---|---|
| | Precursor Material (A) | | Addition to Precursor Material (A) | | Conditions of Hydrothermal Treatment using Precursor Material (C) | | | Support | | Catalytic Substance | | | | |
| | | | | | | | | Zeolite-Type Compound | | Metal Nanoparticles | | | | |
| | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels $D_F$ (nm) | Type | Mean Particle Size $D_C$ (nm) | $D_C/D_F$ | Catalytic Activity | Durability |
| Example 145 | | | | 1000 | | | | | | | 0.08 | 0.1 | C | C |
| Example 146 | | 1.0 | | 500 | | | | | | | 0.24 | 0.4 | C | C |
| Example 147 | | | | 200 | | | | | | | 0.40 | 0.7 | B | C |
| Example 148 | | | | | | | | | | | 0.80 | 1.4 | A | B |
| Example 149 | MCM-41 | 1.5 | Yes | | TPABr | 12 | 72 | MFI | 0.56 | Ni | 1.20 | 2.1 | A | B |
| Example 150 | | 1.8 | | 100 | | | | | | | 1.44 | 2.6 | A | A |
| Example 151 | | 2.0 | | | | | | | | | 1.60 | 2.9 | A | A |
| Example 152 | | 2.5 | | | | | | | | | 2.00 | 3.6 | A | A |
| Example 153 | | 5.0 | | | | | | | | | 4.00 | 7.1 | B | A |

| Example | | | | | | | | | | | | | |
|---|---|---|---|---|---|---|---|---|---|---|---|---|---|
| Example 154 | | 10.0 | | | | | | | | 8.00 | 14.3 | B | A |
| Example 155 | SBA-1 | 15.0 | | | | | | | | 12.00 | 21.4 | C | A |
| Example 156 | | 20.0 | | | | | | | | 16.00 | 28.6 | C | A |
| Example 157 | | 1.0 | | 1000 | | | | | | 0.08 | 0.1 | C | C |
| Example 158 | | 1.0 | | 500 | | | | | | 0.24 | 0.4 | C | C |
| Example 159 | | 1.0 | | 200 | | | | | | 0.40 | 0.7 | B | C |
| Example 160 | | 1.0 | | | | | | | | 0.80 | 1.4 | A | B |
| Example 161 | MCM-41 | 1.5 | | | | | | | | 1.20 | 2.1 | A | B |
| Example 162 | | 1.8 | No | | | | | | | 1.44 | 2.6 | B | A |
| Example 163 | | 2.0 | | | | | | | | 1.60 | 2.9 | B | A |
| Example 164 | | 2.5 | | 100 | | | | | | 2.00 | 3.6 | B | A |
| Example 165 | | 5.0 | | | | | | | | 4.00 | 7.1 | C | A |
| Example 166 | | 10.0 | | | | | | | | 8.00 | 14.3 | C | A |
| Example 167 | SBA-1 | 15.0 | | | | | | | | 12.00 | 21.4 | C | A |
| Example 168 | | 20.0 | | | | | | | | 16.00 | 28.6 | C | A |
| Example 169 | | | 1000 | | | | | | | 0.08 | 0.1 | C | C |
| Example 170 | | | 500 | | | | | | | 0.24 | 0.4 | C | C |
| Example 171 | | 1.0 | 200 | | | | | | | 0.41 | 0.7 | B | C |
| Example 172 | | | | | | | | | | 0.81 | 1.4 | A | B |
| Example 173 | MCM-41 | 1.5 | Yes | | TMABr | 12 | 120 | FER | 0.57 | 1.22 | 2.1 | A | B |
| Example 174 | | 1.8 | | 100 | | | | | | 1.47 | 2.6 | A | B |
| Example 175 | | 2.0 | | | | | | | | 1.63 | 2.9 | A | A |
| Example 176 | | 2.5 | | | | | | | | 2.04 | 3.6 | A | A |

| Example | | | | | | | | | | | | | |
|---|---|---|---|---|---|---|---|---|---|---|---|---|---|
| Example 177 | | 5.1 | | | | | | | | 4.07 | 7.1 | B | A |
| Example 178 | | 10.2 | | | | | | | | 8.14 | 14.3 | B | A |
| Example 179 | SBA-1 | 15.3 | | | | | | | | 12.21 | 21.4 | C | A |
| Example 180 | | 20.4 | | | | | | | | 16.29 | 28.6 | C | A |
| Example 181 | | | 1000 | | | | | | | 0.08 | 0.1 | C | C |
| Example 182 | | 1.0 | 500 | | | | | | | 0.24 | 0.4 | C | C |
| Example 183 | | | 200 | | | | | | | 0.41 | 0.7 | B | C |
| Example 184 | | | | | | | | | | 0.81 | 1.4 | A | B |
| Example 185 | MCM-41 | 1.5 | | | | | | | | 1.22 | 2.1 | A | B |
| Example 186 | | 1.8 | No | | | | | | | 1.47 | 2.6 | A | B |
| Example 187 | | 2.0 | | | | | | | | 1.63 | 2.9 | B | A |
| Example 188 | | 2.5 | | 100 | | | | | | 2.04 | 3.6 | B | A |
| Example 189 | | 5.1 | | | | | | | | 4.07 | 7.1 | C | A |
| Example 190 | | 10.2 | | | | | | | | 8.14 | 14.3 | C | A |
| Example 191 | SBA-1 | 15.3 | | | | | | | | 12.21 | 21.4 | C | A |
| Example 192 | | 20.4 | | | | | | | | 16.29 | 28.6 | C | A |

[Table 5]

| No. | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels DF (nm) | Type | Mean Particle Size DC (nm) | DC/DF | Catalytic Activity | Durability |
|---|---|---|---|---|---|---|---|---|---|---|---|---|---|---|
| Example 193 | | 1.3 | | 1000 | | | | | | | 0.11 | 0.1 | C | C |
| Example 194 | | 1.3 | | 500 | | | | | | | 0.32 | 0.4 | C | C |
| Example 195 | | 1.3 | | 200 | | | | | | | 0.53 | 0.7 | B | C |
| Example 196 | | 1.3 | | 100 | | | | | | | 1.06 | 1.4 | A | B |
| Example 197 | MCM-41 | 2.0 | Yes | 100 | TEABr | 12 | 120 | FAU | 0.74 | Fe | 1.59 | 2.1 | A | B |
| Example 198 | | 2.4 | | 100 | | | | | | | 1.90 | 2.6 | A | A |
| Example 199 | | 2.6 | | 100 | | | | | | | 2.11 | 2.9 | A | A |
| Example 200 | | 3.3 | | 100 | | | | | | | 2.64 | 3.6 | A | A |
| Example 201 | | 6.6 | | 100 | | | | | | | 5.29 | 7.1 | B | A |
| Example 202 | | 13.2 | | | | | | | | | 10.57 | 14.3 | B | A |
| Example 203 | SBA-1 | 19.8 | | | | | | | | | 15.86 | 21.4 | C | A |
| Example 204 | | 26.4 | | | | | | | | | 21.14 | 28.6 | C | A |
| Example 205 | | 1.3 | | 1000 | | | | | | | 0.11 | 0.1 | C | C |
| Example 206 | | 1.3 | | 500 | | | | | | | 0.32 | 0.4 | C | C |
| Example 207 | | 1.3 | | 200 | | | | | | | 0.53 | 0.7 | B | C |
| Example 208 | | | | 100 | | | | | | | 1.06 | 1.4 | A | B |
| Example 209 | MCM-41 | 2.0 | | 100 | | | | | | | 1.59 | 2.1 | A | B |
| Example 210 | | 2.4 | No | 100 | | | | | | | 1.90 | 2.6 | B | A |
| Example 211 | | 2.6 | | 100 | | | | | | | 2.11 | 2.9 | B | A |
| Example 212 | | 3.3 | | 100 | | | | | | | 2.64 | 3.6 | B | A |
| Example 213 | | 6.6 | | 100 | | | | | | | 5.29 | 7.1 | C | A |
| Example 214 | | 13.2 | | | | | | | | | 10.57 | 14.3 | C | A |
| Example 215 | SBA-1 | 19.8 | | | | | | | | | 15.86 | 21.4 | C | A |
| Example 216 | | 26.4 | | | | | | | | | 21.14 | 28.6 | C | A |
| Example 217 | | 1.1 | | 1000 | | | | | | | 0.09 | 0.1 | C | C |
| Example 218 | | 1.1 | | 500 | | | | | | | 0.26 | 0.4 | C | C |
| Example 219 | | 1.1 | | 200 | | | | | | | 0.44 | 0.7 | B | C |
| Example 220 | | | | 100 | | | | | | | 0.87 | 1.4 | A | B |
| Example 221 | MCM-41 | 1.6 | Yes | 100 | | 11 | 72 | MTW | 0.61 | | 1.31 | 2.1 | A | B |
| Example 222 | | 2.0 | | 100 | | | | | | | 1.57 | 2.6 | A | B |
| Example 223 | | 2.2 | | 100 | | | | | | | 1.74 | 2.9 | A | A |
| Example 224 | | 2.7 | | 100 | | | | | | | 2.18 | 3.6 | A | A |

| No. | Type | Pore Diameter | Presence or Absence of Additives | Conversion Ratio of Added Amount of Metal containing Solution (Ratio of Number of Atoms) Si/M | | | | | | | Mean Particle Size Dc | Dc/DF | Catalytic Activity | Durability |
|---|---|---|---|---|---|---|---|---|---|---|---|---|---|---|
| Example 225 | | 5.4 | | | | | | | | | 4.36 | 7.1 | B | A |
| Example 226 | | 10.9 | | | | | | | | | 8.71 | 14.3 | B | A |
| Example 227 | SBA-1 | 16.3 | | | | | | | | | 13.07 | 21.4 | C | A |
| Example 228 | | 21.8 | | | | | | | | | 17.43 | 28.6 | C | A |
| Example 229 | | 1.1 | | 1000 | | | | | | | 0.09 | 0.1 | C | C |
| Example 230 | | | | 500 | | | | | | | 0.26 | 0.4 | C | C |
| Example 231 | | 1.1 | | 200 | | | | | | | 0.44 | 0.7 | B | C |
| Example 232 | | | | | | | | | | | 0.87 | 1.4 | A | B |
| Example 233 | MCM-41 | 1.6 | | | | | | | | | 1.31 | 2.1 | A | B |
| Example 234 | | 2.0 | No | | | | | | | | 1.57 | 2.6 | A | B |
| Example 235 | | 2.2 | | | | | | | | | 1.74 | 2.9 | B | A |
| Example 236 | | 2.7 | | 100 | | | | | | | 2.18 | 3.6 | B | A |
| Example 237 | | 5.4 | | | | | | | | | 4.36 | 7.1 | C | A |
| Example 238 | | 10.9 | | | | | | | | | 8.71 | 14.3 | C | A |
| Example 239 | SBA-1 | 16.3 | | | | | | | | | 13.07 | 21.4 | C | A |
| Example 240 | | 21.8 | | | | | | | | | 17.43 | 28.6 | C | A |

[Table 6]

| No. | Manufacturing Conditions of Structured Catalyst | | | | | | | Structured Catalyst | | | | | Performance Evaluation | |
|---|---|---|---|---|---|---|---|---|---|---|---|---|---|---|
| | Precursor Material (A) | | Addition to Precursor Material (A) | | Conditions of Hydrothermal Treatment using Precursor Material (C) | | | Support | | Catalytic Substance | | | | |
| | | | | | | | | Zeolite-Type Compound | | Metal Nanoparticles | | | | |
| | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels $D_F$ (nm) | Type | Mean Particle Size $D_C$ (nm) | $D_C/D_F$ | Catalytic Activity | Durability |
| Example 241 | | | | 1000 | | | | | | | 0.08 | 0.1 | C | C |
| Example 242 | | 1.0 | | 500 | | | | | | | 0.24 | 0.4 | C | C |
| Example 243 | | | | 200 | | | | | | | 0.40 | 0.7 | B | C |
| Example 244 | | | | | | | | | | | 0.80 | 1.4 | A | B |
| Example 245 | MCM-41 | 1.5 | Yes | | TPABr | 12 | 72 | MFI | 0.56 | Fe | 1.20 | 2.1 | A | B |
| Example 246 | | 1.8 | | 100 | | | | | | | 1.44 | 2.6 | A | A |
| Example 247 | | 2.0 | | | | | | | | | 1.60 | 2.9 | A | A |
| Example 248 | | 2.5 | | | | | | | | | 2.00 | 3.6 | A | A |
| Example 249 | | 5.0 | | | | | | | | | 4.00 | 7.1 | B | A |

| Example | Material | | Condition | | | | | | | | | | | |
|---|---|---|---|---|---|---|---|---|---|---|---|---|---|---|
| Example 250 | | 10.0 | | | | | | | | 8.00 | 14.3 | B | A |
| Example 251 | SBA-1 | 15.0 | | | | | | | | 12.00 | 21.4 | C | A |
| Example 252 | | 20.0 | | | | | | | | 16.00 | 28.6 | C | A |
| Example 253 | | | | 1000 | | | | | | 0.08 | 0.1 | C | C |
| Example 254 | | 1.0 | | 500 | | | | | | 0.24 | 0.4 | C | C |
| Example 255 | | | | 200 | | | | | | 0.40 | 0.7 | B | C |
| Example 256 | | | | | | | | | | 0.80 | 1.4 | A | B |
| Example 257 | MCM-41 | 1.5 | | | | | | | | 1.20 | 2.1 | A | B |
| Example 258 | | 1.8 | No | | | | | | | 1.44 | 2.6 | B | A |
| Example 259 | | 2.0 | | | | | | | | 1.60 | 2.9 | B | A |
| Example 260 | | 2.5 | | 100 | | | | | | 2.00 | 3.6 | B | A |
| Example 261 | | 5.0 | | | | | | | | 4.00 | 7.1 | C | A |
| Example 262 | | 10.0 | | | | | | | | 8.00 | 14.3 | C | A |
| Example 263 | SBA-1 | 15.0 | | | | | | | | 12.00 | 21.4 | C | A |
| Example 264 | | 20.0 | | | | | | | | 16.00 | 28.6 | C | A |
| Example 265 | | | | 1000 | | | | | | 0.08 | 0.1 | C | C |
| Example 266 | | 1.0 | | 500 | | | | | | 0.24 | 0.4 | C | C |
| Example 267 | | | | 200 | | | | | | 0.41 | 0.7 | B | C |
| Example 268 | MCM-41 | | Yes | | TMABr | 12 | 120 | FER | 0.57 | 0.81 | 1.4 | A | B |
| Example 269 | | 1.5 | | | | | | | | 1.22 | 2.1 | A | B |
| Example 270 | | 1.8 | | 100 | | | | | | 1.47 | 2.6 | A | B |
| Example 271 | | 2.0 | | | | | | | | 1.63 | 2.9 | A | A |
| Example 272 | | 2.5 | | | | | | | | 2.04 | 3.6 | A | A |

| Example | Material | | Condition | | | | | | | | | | | |
|---|---|---|---|---|---|---|---|---|---|---|---|---|---|---|
| Example 273 | | 5.1 | | | | | | | | 4.07 | 7.1 | B | A |
| Example 274 | | 10.2 | | | | | | | | 8.14 | 14.3 | B | A |
| Example 275 | SBA-1 | 15.3 | | | | | | | | 12.21 | 21.4 | C | A |
| Example 276 | | 20.4 | | | | | | | | 16.29 | 28.6 | C | A |
| Example 277 | | | | 1000 | | | | | | 0.08 | 0.1 | C | C |
| Example 278 | | 1.0 | | 500 | | | | | | 0.24 | 0.4 | C | C |
| Example 279 | | | | 200 | | | | | | 0.41 | 0.7 | B | C |
| Example 280 | | | | | | | | | | 0.81 | 1.4 | A | B |
| Example 281 | MCM-41 | 1.5 | | | | | | | | 1.22 | 2.1 | A | B |
| Example 282 | | 1.8 | No | | | | | | | 1.47 | 2.6 | A | B |
| Example 283 | | 2.0 | | | | | | | | 1.63 | 2.9 | B | A |
| Example 284 | | 2.5 | | 100 | | | | | | 2.04 | 3.6 | B | A |
| Example 285 | | 5.1 | | | | | | | | 4.07 | 7.1 | C | A |
| Example 286 | | 10.2 | | | | | | | | 8.14 | 14.3 | C | A |
| Example 287 | SBA-1 | 15.3 | | | | | | | | 12.21 | 21.4 | C | A |
| Example 288 | | 20.4 | | | | | | | | 16.29 | 28.6 | C | A |

[Table 7]

| No. | Manufacturing Conditions of Structured Catalyst | | | | | | | Structured Catalyst | | | | | Performance Evaluation | |
|---|---|---|---|---|---|---|---|---|---|---|---|---|---|---|
| | Precursor Material (A) | | Addition to Precursor Material (A) | | Conditions of Hydrothermal Treatment using Precursor Material (C) | | | Support Zeolite-Type Compound | | Catalytic Substance Metal Nanoparticles | | | | |
| | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels $D_F$ (nm) | Type | Mean Particle Size $D_C$ (nm) | $D_C/D_F$ | Catalytic Activity | Durability |
| Example 289 | MCM-41 | 1.3 | Yes | 1000 | TEABr | 12 | 120 | FAU | 0.74 | Ru | 0.11 | 0.1 | C | C |
| Example 290 | | 1.3 | | 500 | | | | | | | 0.32 | 0.4 | C | C |
| Example 291 | | 1.3 | | 200 | | | | | | | 0.53 | 0.7 | B | C |
| Example 292 | | | | 100 | | | | | | | 1.06 | 1.4 | A | B |
| Example 293 | MCM-41 | 2.0 | | | | | | | | | 1.59 | 2.1 | A | B |
| Example 294 | | 2.4 | | 100 | | | | | | | 1.90 | 2.6 | A | A |
| Example 295 | | 2.6 | | | | | | | | | 2.11 | 2.9 | A | A |
| Example 296 | | 3.3 | | | | | | | | | 2.64 | 3.6 | A | A |
| Example 297 | | 6.6 | | | | | | | | | 5.29 | 7.1 | B | A |
| Example 298 | | 13.2 | | | | | | | | | 10.57 | 14.3 | B | A |
| Example 299 | SBA-1 | 19.8 | | | | | | | | | 15.86 | 21.4 | C | A |
| Example 300 | | 26.4 | | | | | | | | | 21.14 | 28.6 | C | A |
| Example 301 | | 1.3 | | 1000 | | | | | | | 0.11 | 0.1 | C | C |
| Example 302 | | 1.3 | | 500 | | | | | | | 0.32 | 0.4 | C | C |
| Example 303 | | 1.3 | | 200 | | | | | | | 0.53 | 0.7 | B | C |
| Example 304 | | | | | | | | | | | 1.06 | 1.4 | A | B |
| Example 305 | MCM-41 | 2.0 | | | | | | | | | 1.59 | 2.1 | A | B |
| Example 306 | | 2.4 | No | | | | | | | | 1.90 | 2.6 | B | A |
| Example 307 | | 2.6 | | | | | | | | | 2.11 | 2.9 | B | A |
| Example 308 | | 3.3 | | 100 | | | | | | | 2.64 | 3.6 | B | A |
| Example 309 | | 6.6 | | | | | | | | | 5.29 | 7.1 | C | A |
| Example 310 | | 13.2 | | | | | | | | | 10.57 | 14.3 | C | A |
| Example 311 | SBA-1 | 19.8 | | | | | | | | | 15.86 | 21.4 | C | A |
| Example 312 | | 26.4 | | | | | | | | | 21.14 | 28.6 | C | A |
| Example 313 | | 1.1 | | 1000 | | | | | | | 0.09 | 0.1 | C | C |
| Example 314 | | 1.1 | | 500 | | | | | | | 0.26 | 0.4 | C | C |
| Example 315 | | 1.1 | | 200 | | | | | | | 0.44 | 0.7 | B | C |
| Example 316 | MCM-41 | | Yes | | | 11 | 72 | MTW | 0.61 | | 0.87 | 1.4 | A | B |
| Example 317 | | 1.6 | | | | | | | | | 1.31 | 2.1 | A | B |
| Example 318 | | 2.0 | | 100 | | | | | | | 1.57 | 2.6 | A | B |
| Example 319 | | 2.2 | | | | | | | | | 1.74 | 2.9 | A | A |
| Example 320 | | 2.7 | | | | | | | | | 2.18 | 3.6 | A | A |

| No. | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels $D_F$ (nm) | Type | Mean Particle Size $D_C$ (nm) | $D_C/D_F$ | Catalytic Activity | Durability |
|---|---|---|---|---|---|---|---|---|---|---|---|---|---|---|
| Example 321 | | 5.4 | | | | | | | | | 4.36 | 7.1 | B | A |
| Example 322 | | 10.9 | | | | | | | | | 8.71 | 14.3 | B | A |
| Example 323 | SBA-1 | 16.3 | | | | | | | | | 13.07 | 21.4 | C | A |
| Example 324 | | 21.8 | | | | | | | | | 17.43 | 28.6 | C | A |
| Example 325 | | 1.1 | | 1000 | | | | | | | 0.09 | 0.1 | C | C |
| Example 326 | | 1.1 | | 500 | | | | | | | 0.26 | 0.4 | C | C |
| Example 327 | | 1.1 | | 200 | | | | | | | 0.44 | 0.7 | B | C |
| Example 328 | | | | | | | | | | | 0.87 | 1.4 | A | B |
| Example 329 | MCM-41 | 1.6 | | | | | | | | | 1.31 | 2.1 | A | B |
| Example 330 | | 2.0 | No | | | | | | | | 1.57 | 2.6 | A | B |
| Example 331 | | 2.2 | | | | | | | | | 1.74 | 2.9 | B | A |
| Example 332 | | 2.7 | | 100 | | | | | | | 2.18 | 3.6 | B | A |
| Example 333 | | 5.4 | | | | | | | | | 4.36 | 7.1 | C | A |
| Example 334 | | 10.9 | | | | | | | | | 8.71 | 14.3 | C | A |
| Example 335 | SBA-1 | 16.3 | | | | | | | | | 13.07 | 21.4 | C | A |
| Example 336 | | 21.8 | | | | | | | | | 17.43 | 28.6 | C | A |

[Table 8]

| No. | Manufacturing Conditions of Structured Catalyst | | | | | | | Structured Catalyst | | | | Performance Evaluation | | |
|---|---|---|---|---|---|---|---|---|---|---|---|---|---|---|
| | Precursor Material (A) | | Addition to Precursor Material (A) | | Conditions of Hydrothermal Treatment using Precursor Material (C) | | | Support | | Catalytic Substance | | | | |
| | | | | | | | | Zeolite-Type Compound | | Metal Nanoparticles | | | | |
| | Type | Pore Diameter (nm) | Presence or Absence of Additives | Conversion Ratio of Added Amount of Metal containing Solution (Ratio of Number of Atoms) Si/M | Type of Structure Directing Agent | pH | Time (h) | Framework | Average Inner Diameter of Channels $D_F$ (nm) | Type | Mean Particle Size $D_C$ (nm) | $D_C/D_F$ | Catalytic Activity | Durability |
| Example 337 | | 1.0 | | 1000 | | | | | | | 0.08 | 0.1 | C | C |
| Example 338 | | 1.0 | | 500 | | | | | | | 0.24 | 0.4 | C | C |
| Example 339 | | 1.0 | | 200 | | | | | | | 0.40 | 0.7 | B | C |
| Example 340 | MCM-41 | | Yes | | TPABr | 12 | 72 | MFI | 0.56 | Ru | 0.80 | 1.4 | A | B |
| Example 341 | | 1.5 | | | | | | | | | 1.20 | 2.1 | A | B |
| Example 342 | | 1.8 | | 100 | | | | | | | 1.44 | 2.6 | A | A |
| Example 343 | | 2.0 | | | | | | | | | 1.60 | 2.9 | A | A |
| Example 344 | | 2.5 | | | | | | | | | 2.00 | 3.6 | A | A |

| Example | Support | Value | | Num | | | | | | | | | | | |
|---|---|---|---|---|---|---|---|---|---|---|---|---|---|---|---|
| Example 345 | | 5.0 | | | | | | | | | | 4.00 | 7.1 | B | A |
| Example 346 | | 10.0 | | | | | | | | | | 8.00 | 14.3 | B | A |
| Example 347 | SBA-1 | 15.0 | | | | | | | | | | 12.00 | 21.4 | C | A |
| Example 348 | | 20.0 | | | | | | | | | | 16.00 | 28.6 | C | A |
| Example 349 | | 1.0 | | 1000 | | | | | | | | 0.08 | 0.1 | C | C |
| Example 350 | | | | 500 | | | | | | | | 0.24 | 0.4 | C | C |
| Example 351 | | | | 200 | | | | | | | | 0.40 | 0.7 | B | C |
| Example 352 | | | | | | | | | | | | 0.80 | 1.4 | A | B |
| Example 353 | MCM-41 | 1.5 | No | | | | | | | | | 1.20 | 2.1 | A | B |
| Example 354 | | 1.8 | | | | | | | | | | 1.44 | 2.6 | B | A |
| Example 355 | | 2.0 | | | | | | | | | | 1.60 | 2.9 | B | A |
| Example 356 | | 2.5 | | 100 | | | | | | | | 2.00 | 3.6 | B | A |
| Example 357 | | 5.0 | | | | | | | | | | 4.00 | 7.1 | C | A |
| Example 358 | | 10.0 | | | | | | | | | | 8.00 | 14.3 | C | A |
| Example 359 | SBA-1 | 15.0 | | | | | | | | | | 12.00 | 21.4 | C | A |
| Example 360 | | 20.0 | | | | | | | | | | 16.00 | 28.6 | C | A |
| Example 361 | | 1.0 | | 1000 | | | | | | | | 0.08 | 0.1 | C | C |
| Example 362 | | | | 500 | | | | | | | | 0.24 | 0.4 | C | C |
| Example 363 | | | | 200 | | | | | | | | 0.41 | 0.7 | B | C |
| Example 364 | MCM-41 | | Yes | | | TMABr | 12 | 120 | FER | 0.57 | | 0.81 | 1.4 | A | B |
| Example 365 | | 1.5 | | 100 | | | | | | | | 1.22 | 2.1 | A | B |
| Example 366 | | 1.8 | | | | | | | | | | 1.47 | 2.6 | A | B |
| Example 367 | | 2.0 | | | | | | | | | | 1.63 | 2.9 | A | A |

| Example | Support | Value | | Num | | | | | | | | | | | |
|---|---|---|---|---|---|---|---|---|---|---|---|---|---|---|---|
| Example 368 | | 2.5 | | | | | | | | | | 2.04 | 3.6 | A | A |
| Example 369 | | 5.1 | | | | | | | | | | 4.07 | 7.1 | B | A |
| Example 370 | | 10.2 | | | | | | | | | | 8.14 | 14.3 | B | A |
| Example 371 | SBA-1 | 15.3 | | | | | | | | | | 12.21 | 21.4 | C | A |
| Example 372 | | 20.4 | | | | | | | | | | 16.29 | 28.6 | C | A |
| Example 373 | | 1.0 | | 1000 | | | | | | | | 0.08 | 0.1 | C | C |
| Example 374 | | | | 500 | | | | | | | | 0.24 | 0.4 | C | C |
| Example 375 | | | | 200 | | | | | | | | 0.41 | 0.7 | B | C |
| Example 376 | | | | | | | | | | | | 0.81 | 1.4 | A | B |
| Example 377 | MCM-41 | 1.5 | | | | | | | | | | 1.22 | 2.1 | A | B |
| Example 378 | | 1.8 | No | | | | | | | | | 1.47 | 2.6 | A | B |
| Example 379 | | 2.0 | | | | | | | | | | 1.63 | 2.9 | B | A |
| Example 380 | | 2.5 | | 100 | | | | | | | | 2.04 | 3.6 | B | A |
| Example 381 | | 5.1 | | | | | | | | | | 4.07 | 7.1 | C | A |
| Example 382 | | 10.2 | | | | | | | | | | 8.14 | 14.3 | C | A |
| Example 383 | SBA-1 | 15.3 | | | | | | | | | | 12.21 | 21.4 | C | A |
| Example 384 | | 20.4 | | | | | | | | | | 16.29 | 28.6 | C | A |
| Comparative Example 1 | - | | | | | MFI type silicalite | 0.56 | CoO$_x$ | ≤ 50 | ≤ 67.6 | | | | C | D |
| Comparative Example 2 | - | | | | | MFI type silicalite | 0.56 | - | - | - | | | | D | D |

As can be seen from Tables 1 to 8, the structured catalysts (Examples 1 to 384), which were confirmed by cross sectional observation to hold the catalytic substance in the interior of the support, was found to exhibit excellent catalytic activity and excellent durability as a catalyst in the ammonia decomposition reaction when compared to the structured catalyst in which the catalytic substance is simply attached to the outer surface of the support (Comparative Example 1) or the skeletal body itself without any functional substances (Comparative Example 2).

On the other hand, the support itself without any catalytic substances in Comparative Example 2 exhibited little catalytic activity in the ammonia decomposition reaction, and was inferior to the structured catalysts of Examples 1 to 384 in both the catalytic activity and the durability.

Furthermore, the structured catalyst of Comparative Example 1 in which the catalytic substance was attached only to the outer surface of the support showed improvement in the catalytic activity in the ammonia decomposition reaction when compared to the support itself without any catalytic substances in Comparative Example 2, but exhibited inferior durability as a catalyst when compared to the structured catalysts of Examples 1 to 384.

Other Embodiments

(1) A method for decomposing ammonia using a catalyst, wherein the catalyst includes a structured catalyst for ammonia decomposition , the structured catalyst for ammonia decomposition includes a support having a porous structure constituted of a zeolite-type compound and metal nanoparticles present inside the support, the support including channels connecting with each other, and the metal nanoparticles being held at least in an enlarged pore portion of the channels of the support.

(2) The method for decomposing ammonia, wherein ammonia is decomposed by supplying it to the structured catalyst for ammonia decomposition according to the above-described embodiment.

(3) A fuel cell system configured to perform decomposition treatment by supplying ammonia to a fuel cell including the structured catalyst for ammonia decomposition described in the above-described embodiment.

Reference Signs List

| 1 | Structured catalyst |
|---|---|
| 10 | Support |
| 10a | Outer surface |
| 11 | Channel |
| 11a | Pore |
| 12 | Enlarged pore portion |
| 20 | Catalytic substance |
| 30 | Catalytic substance |
| $D_C$ | Mean particle size |
| $D_F$ | Average inner diameter |
| $D_E$ | Inner diameter |

**Claims**

1. A structured catalyst for ammonia decomposition used for decomposing ammonia to generate hydrogen, comprising:

   a support having a porous structure constituted of a zeolite-type compound; and
   at least one catalytic substance present inside the support, wherein
   the support includes channels connecting with each other, and
   the catalytic substance is metal nanoparticles and present at least in the channels of the support.

2. The structured catalyst for ammonia decomposition according to claim 1, wherein
   the channels include an enlarged pore portion, and
   the catalytic substance is present at least in the enlarged pore portion.

3. The structured catalyst for ammonia decomposition according to claim 2, wherein
   the enlarged pore portion causes a plurality of pores constituting any one of the one-dimensional pore, the two-dimensional pore, and the three-dimensional pore to connect with each other.

4. The structured catalyst for ammonia decomposition according to any one of claims 1 to 3, wherein
the metal nanoparticle is constituted of at least one of ruthenium, iron, cerium, aluminum, nickel, copper, or zinc.

5. The structured catalyst for ammonia decomposition according to any one of claims 1 to 4, wherein
a mean particle size of the metal nanoparticles is greater than an average inner diameter of the channels and is less than or equal to an inner diameter of the enlarged pore portion.

6. The structured catalyst for ammonia decomposition according to any one of claims 1 to 5, wherein
a metal element (M) of the metal nanoparticles is contained in an amount from 0.5 to 2.5 mass% based on the structured catalyst.

7. The structured catalyst for ammonia decomposition according to any one of claims 1 to 6, wherein
the mean particle size of the metal nanoparticles is from 0.08 nm to 30 nm.

8. The structured catalyst for ammonia decomposition according to claim 7, wherein
the mean particle size of the metal nanoparticles is from 0.5 nm to 11.0 nm.

9. The structured catalyst for ammonia decomposition according to any one of claims 1 to 8, wherein
a ratio of the mean particle size of the metal nanoparticles to the average inner diameter of the channels is from 0.05 to 300.

10. The structured catalyst for ammonia decomposition according to claim 9, wherein
the ratio of the mean particle size of the metal nanoparticles to the average inner diameter of the channels is from 0.1 to 30.

11. The structured catalyst for ammonia decomposition according to claim 10, wherein
the ratio of the mean particle size of the metal nanoparticles to the average inner diameter of the channels is from 1.4 to 3.6.

12. The structured catalyst for ammonia decomposition according to any one of claims 1 to 11, wherein
the channels include any one of a one-dimensional pore, a two-dimensional pore, and a three-dimensional pore defined by a framework of the zeolite-type compound and an enlarged pore portion having a diameter different from that of any of the one-dimensional pore, the two-dimensional pore, and the three-dimensional pore,
the average inner diameter of the channels is from 0.1 nm to 1.5 nm, and
the inner diameter of the enlarged pore portion is from 0.5 nm to 50 nm.

13. The structured catalyst for ammonia decomposition according to any one of claims 1 to 12, further comprising at least one other catalytic substance held on an outer surface of the support.

14. The structured catalyst for ammonia decomposition according to claim 13, wherein
a content of the at least one catalytic substance present inside the support is greater than a content of the at least one other catalytic substance held on the outer surface of the support.

15. The structured catalyst for ammonia decomposition according to any one of claims 1 to 14, wherein
the zeolite-type compound is a silicate compound.

16. A fuel cell comprising the structured catalyst for ammonia decomposition described in any one of claims 1 to 15.

17. A structured catalyst for ammonia decomposition , comprising the steps of:

calcinating a precursor material (B) obtained by impregnating, with a metal containing solution, a precursor material (A) for obtaining a support having a porous structure constituted of a zeolite-type compound;
hydrothermally treating a precursor material (C) obtained by calcinating the precursor material (B); and
performing a reduction treatment of the precursor material (C) that has been hydrothermally treated.

18. The structured catalyst for ammonia decomposition according to claim 17, wherein
From 50 to 500 mass% of a non-ionic surfactant is added to the precursor material (A) before the calcinating.

**19.** The structured catalyst for ammonia decomposition according to claim 17 or 18, wherein
the precursor material (A) is impregnated with the metal containing solution by adding the metal containing solution to the precursor material (A) in multiple portions before the calcinating.

**20.** The structured catalyst for ammonia decomposition according to any one of claims 17 to 19, wherein
in impregnating the precursor material (A) with the metal containing solution before the calcinating, an added amount of the metal containing solution added to the precursor material (A), in terms of a ratio of silicon (Si) constituting the precursor material (A) to a metal element (M) contained in the metal containing solution added to the precursor material (A) (a ratio of number of atoms Si/M), is adjusted to from 10 to 1000.

**21.** The structured catalyst for ammonia decomposition according to claim 17, wherein
in the hydrothermally treating, the precursor material (C) and a structure directing agent are mixed.

**22.** The structured catalyst for ammonia decomposition according to claim 17, wherein
the hydrothermally treating is performed under a basic condition.

# FIG. 1A

# FIG. 1B

# FIG. 2A

# FIG. 2B

PREPARE PRECURSOR
MATERIAL (A) ⎤⎦~S1

↓

IMPREGNATE PRECURSOR
MATERIAL (A) WITH METAL
CONTAINING SOLUTION ⎤⎦~S2

↓

CALCINATE THE RESULTING
PRECURSOR MATERIAL (B) ⎤⎦~S3

↓

MIX RESULTANT PRECURSOR
MATERIAL (C) WITH STRUCTURE
DIRECTING AGENT AND PERFORM
HYDROTHERMAL TREATMENT ⎤⎦~S4

# FIG. 3

FIG. 4

**INTERNATIONAL SEARCH REPORT**

| International application No. |
| --- |
| PCT/JP2018/021089 |

### A. CLASSIFICATION OF SUBJECT MATTER

Int.Cl.   B01J29/035(2006.01)i, B01J29/14(2006.01)i, B01J29/46(2006.01)i, B01J29/68(2006.01)i, B01J29/76(2006.01)i, B01J35/10(2006.01)i, C01B3/04(2006.01)i, H01M8/0606(2016.01)i

According to International Patent Classification (IPC) or to both national classification and IPC

### B. FIELDS SEARCHED

Minimum documentation searched (classification system followed by classification symbols)

Int.Cl.   B01J29/035, B01J29/14, B01J29/46, B01J29/68, B01J29/76, B01J35/10, C01B3/04, H01M8/0606

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)
JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2016-064407 A (UNIVERSITY OF YAMANASHI) 28 April 2016, claims, paragraphs [0021]-[0035], [0058]-[0059], [0063]-[0066], fig. 4, 7-10 (Family: none) | 1-15, 17-22<br>16 |
| X<br>Y | WO 2015/155216 A1 (DANMARKS TEKNISKE UNIVERSITET) 15 October 2015, claims, page 4, line 24 to page 7, line 25, page 14, line 4 to page 19, line 3, fig. 1 & JP 2017-515785 A & US 2017/0036197 A1 & EP 3129138 A1 & CN 106457229 A | 1-15<br>16 |
| Y | JP 2017-050143 A (PANASONIC IP MANAGEMENT CO., LTD.) 09 March 2017, claims, paragraphs [0051]-[0053], [0077] (Family: none) | 16 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 August 2018 (22.08.2018) | 04 September 2018 (04.09.2018) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

33

**INTERNATIONAL SEARCH REPORT**

International application No.

PCT/JP2018/021089

C (Continuation).    DOCUMENTS CONSIDERED TO BE RELEVANT

| Category* | Citation of document, with indication, where appropriate, of the relevant passages | Relevant to claim No. |
|---|---|---|
| A | JP 11-033412 A (UNITIKA LTD.) 09 February 1999, claims, paragraphs [0007]-[0025], examples (Family: none) | 1-22 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014045780 A